# EUROPEAN PATENT SPECIFICATION

(11) **EP 1 744 519 B1**
(45) Date of publication and mention of the grant of the patent: **21.09.2011**
(21) Application number: 06076423.0
(22) Date of filing: 14.07.2006
(51) Int. Cl.: H04L 29/08

(54) **Information exchange system, management server, and method for reducing the network load**
System zum Austausch von Informationen, Verwaltungsserver, und Verfahren zur Verringerung der Netzwerksbelastung
Système d'échange d'informations, serveur de gestion, et procédé pour diminuer la charge de réseau

(30) Priority: 15.07.2005 JP 2005206275
(43) Date of publication of application: 17.01.2007
(73) Proprietor: NEC Corporation, Minato-ku Tokyo 108-8001 (JP)
(72) Inventor: Shinohara, Noriko c/o NEC Corporation, Minato-ku Tokyo (JP); Ito, Naoko c/o NEC Corporation, Minato-ku Tokyo (JP); Hashiguchi, Atsushi c/o NEC Communication Systems, Ltd., Minato-ku Tokyo (JP); Hataya, Noriko c/o NEC Communication Systems, Ltd., Minato-ku Tokyo (JP); Ueda, Yasuyuki c/o NEC Communication Systems, Ltd., Minato-ku Tokyo (JP)
(74) Representative: Wenzel & Kalkoff

(56) References cited:
- WO-A-2004/008178
- WO-A-2004/059946
- WO-A-2005/036299
- ROSENBERG DYNAMICSOFT J: "A Session Initiation Protocol (SIP) Event Package for Modification Events for the Extensible Markup Language (XML) Configuration Access Protocol (XCAP) Managed Documents" IETF STANDARD-WORKING-DRAFT, INTERNET ENGINEERING TASK FORCE, IETF, CH, vol. simple, no. 1, 16 February 2004 (2004-02-16), XP015027668 ISSN: 0000-0004
- SIMPLE WG J ROSENBERG ET AL: "A SIP Event Package for Buddylist Presence" IETF STANDARD-WORKING-DRAFT, INTERNET ENGINEERING TASK FORCE, IETF, CH, 14 November 2001 (2001-11-14), XP015034672 ISSN: 0000-0004

## Description

### BACKGROUND OF THE INVENTION

The present invention relates to information exchange systems, management servers, and methods for reducing network load that are used in the information exchange systems, and in particular, relates to a method for reducing network load between subscribers and notifiers.

A framework between a subscriber and a notifier is disclosed in "Session Initiation Protocol (SIP)-Specific Event Notification: 3. Node Behavior" [RFC (Request for Comments) 3265, June 2002] (Document 1). The subscriber monitors the status of resources for a predetermined period of time, and the notifier sends notifications of the status of resources to the subscriber. In one case, this framework is applied to presence services [for example, see "A Presence Event Package for the Session Initiation Protocol (SIP): Status of this Memo" (RFC 3856, August 2004)] (Document 2). Presence services represent general systems that manage the status of individual resources. The basic architecture of presence services is disclosed in "A Model for Presence and Instant Messaging" (RFC 2778, February 2000) (Document 3). In this case, resources represent objects the status of which are monitored by the subscriber.

Different techniques are known in order to account for any changes in the respective resources. For example, WO 2004/059946 A discloses to send a changed content automatically when the respective content is updated. A facilitated way of releasing an end-to-end communication network session at the instigation of network midpoints instead of endpoints is known from WO 2005/036299 A. Moreover, a system for monitoring changes in documents which are accessed by multiple users is presented by J. Rosenberg ("A Session Initiation Protocol (SIP) Event Package for Modification Events for the Extensible Markup Language (XML) Configuration Access Protocol (XCAP) Managed Documents", IETF STANDARD-WORKING DRAFT, INTERNET ENGINEERING TASK FORCE, IETF, CH, 16 February 2004); according to this approach, extensions to the XCAP package are suggested in order to account for multiuser operability.

The aforementioned subscriber may not monitor only one resource. When the subscriber monitors a plurality of resources, in general, SUBSCRIBE (registration and subscription) requests need to be sent to the notifier for individual resources to manage subscriptions (contract and subscription). The subscriptions include information, such as the link between the subscriber and the notifier and event packages to be used.

The aforementioned subscribers have the following problems:
1. When subscriptions are started or updated for a plurality of resources at the same time, network traffic temporarily increases.
2. When the notifier does not accept an interval for updating subscriptions, which is requested by the subscriber, and requests frequent updating of subscriptions, the subscriber needs to frequently issue SUBSCRIBE requests.
3. When the notifier frequently makes notifications of the status of resources in response to SUBSCRIBE requests from the subscriber, unnecessary NOTIFY (notification) increases network traffic.

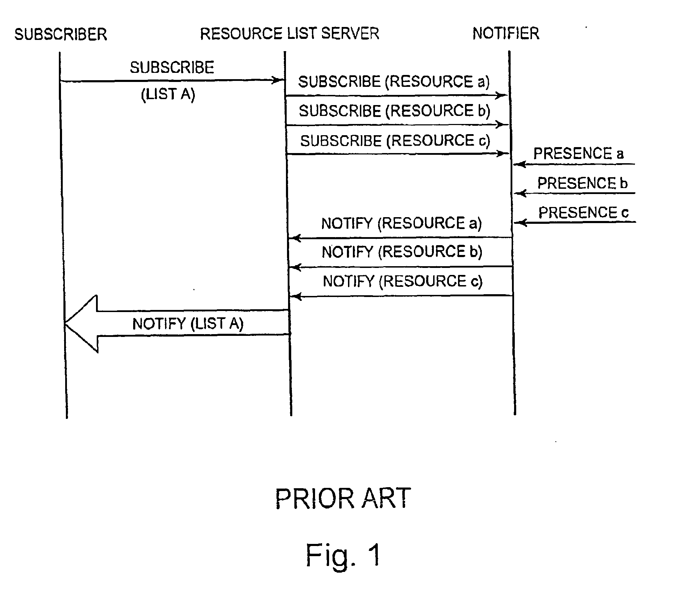

In order to reduce the network load for a single resource, WO 2004/008178 A suggests to individually transmit a partial status information instead of the complete status information when the status is changed. For solving the above-mentioned problems associated with monitoring a plurality of resources, a resource list server is proposed (for example, see "A Session Initiation Protocol (SIP) Event Notification Extension for Resource Lists: 4. Operation of List Subscriptions, 5. Using multipart/related to Convey Aggregate State" [IETF (Internet Engineering Task Force) Internet Draft, December 15, 2004 (http://www.ietf.org/internet-drafts/draft-ietf-simple-event-list-07.txt)] (Document 4), "Extensible Markup Language (XML) Formats for Representing Resource Lists" [IETF Internet Draft, February 7, 2005 (http://www.ietf.org/internet-drafts/draft-ietf-simple-xcap-list-usage-05.txt) or J. Rosenberg and B. Campbell: "A SIP Event Package for Buddylist Presence", IETF STANDARD-WORKING DRAFT, INTERNET ENGINEERING TASK FORCE, IETF, CH, 14 November 2001] (Document 5), which accepts SUBSCRIBE requests for a plurality of resources and issues one NOTIFY that includes the status of the plurality of resources, as shown in Fig. 1. Although this resource list server can reduce network load due to SUBSCRIBE requests, network load due to NOTIFY and load of processing on the subscriber may increase.

On the other hand, a method is proposed (for example, see "An Extensible Markup Language (XML) Based Format for Event Notification Filtering" [IETF Internet Draft, March 15, 2005 (http://www.ietf.org/internet-drafts/draft-ietf-simple-filter-format-05.txt)] (Document 6) and "Functional Description of Event Notification Filtering" [IETF Internet Draft, March 15, 2005 (http://www.ietf.org/internet-drafts/draft-ietf-simple-event-filter-funct-05.txt)] (Document 7), in which network load due to NOTIFY is reduced by filtering notifications of status. In this method, load of back-end subscriptions from a resource list server to resources can be reduced. However, the content of NOTIFY that is sent from the resource list server to the subscriber is not directly filtered.

In the resource list server described in the document 4, when the subscriber updates subscriptions, the notifier for the resources sends NOTIFY messages that include the status of the resources. Thus, the subscriber can determine that a request for updating subscriptions has been accepted. However, information on the status of the resources that has been already recognized by the subscriber is resent. Thus, unnecessary data is sent through the network.

Moreover, when the valid periods of subscriptions from a certain subscriber to a plurality of resources are the same, the subscriptions are updated at the same time. Thus, unnecessary data is sent at the same time, and network load explosively increases. The same problem also occurs when a notifier for a subscriber is a resource list server.

### SUMMARY OF THE INVENTION

It is an object of the present invention to provide an information exchange system for preventing unnecessary data being sent through networks due to updating of subscriptions and a management server and a method for reducing network load that are used in the information exchange system.

According to a first aspect of the present invention, an information exchange system comprises the features of claim 1.

According to a second aspect of the present invention, an information exchange system comprises the features of claim 11.

According to a third aspect of the present invention, a management server comprises the features of claim 22.

According to a fourth aspect of the present invention, a management server comprises the features of claim 28.

According to a fifth aspect of the present invention, a method for reducing network load comprises the step of claim 35.

According to a sixth aspect of the present invention, a method for reducing network load comprises the steps of claim 45.

In the information exchange system according to the present invention, when a subscription (contract and subscription) is updated, a NOTIFY message that includes no content is sent instead of a NOTIFY (notification) message that includes the status of the corresponding resource. The subscription includes information, such as the link between the subscriber and the notifier and event packages to be used.

Specifically, in the information exchange system according to the present invention, when the notifier has received a request for updating an existing subscription, a NOTIFY message that includes no content is sent to the subscriber. Even in a case where NOTIFY messages are sent for individual resources, when a subscription for a resource list has been updated, only one NOTIFY message that includes no content is sent. However, when a NOTIFY message that is sent when the status of a resource changes has not been delivered, a NOTIFY message that includes the status of the resource is sent instead of the NOTIFY message that includes no content.

Thus, in the information exchange system according to the present invention, the network load can be reduced by sending the NOTIFY message including no content that is sent when a subscription has been updated and putting a plurality of NOTIFY messages that no content together into one NOTIFY message that includes no content, the plurality of NOTIFY messages being sent when a subscription has been updated.

### BRIEF DESCRIPTION OF THE DRAWINGS

Fig. 1 is a sequence chart showing typical operation of a conventional information exchange system;
Fig. 2 is a block diagram showing the structure of an information exchange system according to a first example not covered by the present invention;
Fig. 3 shows typical list tables in a list management unit according to the first example;
Fig. 4 is a sequence chart showing the operation of the information exchange system according to the first example;
Figs. 5 to 7 are flowcharts showing the process of receiving a SUBSCRIBE according to the first example;
Figs. 8 and 9 are flowcharts showing the process of receiving an UNSUBSCRIBE according to the first example;
Fig. 10 is a flowchart showing the process of receiving a NOTIFY according to the first example;
Fig. 11 is a block diagram showing the structure of a subscriber according to the first example;
Fig. 12 is a flowchart showing typical operation of the subscriber according to the first example;
Fig. 13 is a block diagram showing the structure of an information exchange system according to a second example not covered by the present invention; and
Fig. 14 is a flowchart showing the process of receiving a SUBSCRIBE (updating) according to the first embodiment of the present invention.

### DESCRIPTION OF THE PREFERRED EMBODIMENTS

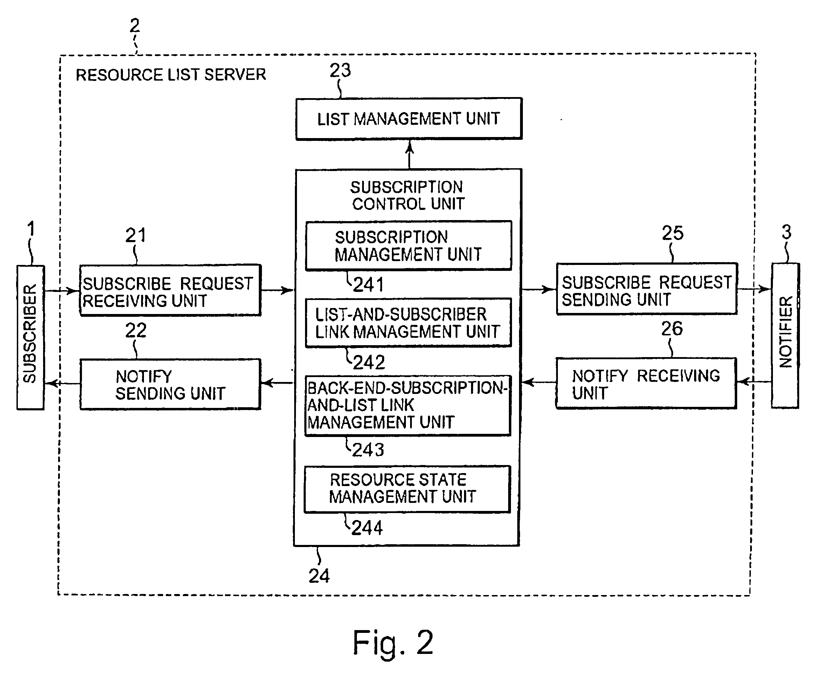

Fig. 2 is a block diagram showing the structure of an information exchange system according to a first example not covered by the present invention. Generally, the first example is different from the present invention in that a NOTIFY message that includes no content is sent for a list instead of each resources when a subscription is updated according to the present invention. In Fig. 2, the information exchange system includes a subscriber (a terminal unit or a second terminal unit) 1, a resource list server 2, and a notifier (a different terminal unit or a first terminal unit) 3. The subscriber 1 monitors the status of resources (objects to be monitored by the subscriber 1) for a predetermined period of time, and the notifier 3 sends notifications of the status of the resources to the subscriber 1.

The resource list server 2 manages lists of resources. The information of the status of these resources is exchanged between the subscriber 1 and the notifier 3. The resource list server 2 includes a SUBSCRIBE (registration and subscription) request receiving unit 21, a NOTIFY (notification) sending unit 22, a list management unit 23, a subscription (contract and subscription) control unit 24, a SUBSCRIBE request sending unit 25, and a NOTIFY receiving unit 26. Fig. 2 shows only components that are required to describe the operation in the first example.

The subscription control unit 24 includes a subscription management unit 241, a list-and-subscriber link management unit 242, a back-end-subscription-and-list link management unit 243, and a resource status management unit 244. The resource status management unit 244 may be called monitored-object status retaining means or resource status retaining means.

The list management unit 23 manages the identifiers of resources included in individual resource lists. The SUBSCRIBE request receiving unit 21 and the NOTIFY sending unit 22 provide interfaces to the subscriber 1, When the SUBSCRIBE request receiving unit 21 has received a SUBSCRIBE or UNSUBSCRIBE request for a resource list managed by the list management unit 23 from the subscriber 1, the SUBSCRIBE request receiving unit 21 transfers the request to the subscription management unit 241. The NOTIFY sending unit 22 sends the information of the status of resources to the subscriber 1 that subscribes for a list that includes the resources. The information of the status of the resources is included in a NOTIFY message.

The SUBSCRIBE request sending unit 25 and the NOTIFY receiving unit 26 provide interfaces to the notifier 3 for resources. The SUBSCRIBE request sending unit 25 sends a SUBSCRIBE and UNSUBSCRIBE request for resources from the resource list server 2 on the behalf of the subscriber 1. The NOTIFY receiving unit 26 receives a NOTIFY message that includes the status of resources from the notifier 3 for the resources.

The notifier 3 for resources may be dedicated to each resource or, like a presence server, may handle the status of a plurality of resources. The presence server is a physical entity (function) and functions as a presence agent or a proxy server for SUBSCRIBE requests. When the presence server functions as a presence agent, the presence server has the presence information of the presentity (the presence or status of everything, for example, status such as "attended" or "out"). When the presence server functions as a proxy server, SUBSCRIBE requests are transferred to another entity that functions as a presence agent.

The subscription control unit 24 generates back-end subscriptions on the basis of a SUBSCRIBE request from the subscriber 1 for a list. The back-end subscriptions represent subscriptions from the resource list server 2 for resources. The subscriptions include information, such as the link between the subscriber 1 and the notifier 3 and event packages to be used.

The subscription management unit 241 manages a subscription for a list from the subscriber 1 and back-end subscriptions, The subscription management unit 241 generates, updates, or stops a subscription upon receiving a SUBSCRIBE or UNSUBSCRIBE request from the subscriber 1.

The list-and-subscriber link management unit 242 retains groups of subscribers for individual lists. When the subscriber 1 is associated with a list, the list-and-subscriber link management unit 242 requests the back-end-subscription-and-list link management unit 243 to add the list. Moreover, when the subscriber 1 associated with a list has disappeared, the list-and-subscriber link management unit 242 requests the back-end-subscription-and-list link management unit 243 to delete the list.

The back-end-subscription-and-list link management unit 243 retains the links between subscriptions from the resource list server 2 for resources and corresponding lists that have caused the subscriptions to be generated. The resource status management unit 244 retains the status of resources, which is obtained by NOTIFY for back-end subscriptions.

Each back-end subscription is valid during a period in which at least one list is associated with the back-end subscription. Each back-end subscription disappears when lists associated with the back-end subscription have disappeared. Then, an UNSUBSCRIBE request is sent from the SUBSCRIBE request sending unit 25, and the status of resources managed by the resource status management unit 244 is set invalid.

In Fig. 2, the resource list server 2 and the notifier 3 are separately shown. Alternatively, when the notifier 3 is a presence server, the resource list server 2 and the notifier 3 can be packaged in a single server.

In the information exchange system according to the first example, when the resource list server 2 has received a SUBSCRIBE request for a list, the resource list server 2 issues SUBSCRIBE requests for individual resources included in the list. Moreover, when the resource list server 2 has received a NOTIFY message that includes the status of a resource from the notifier 3 for the resource, the resource list server 2 sends a NOTIFY message to the subscriber 1 that retains a subscription for the list, which includes the resource.

Thus, in the information exchange system according to the first example, when notifications of the status of individual resources need to be received, SUBSCRIBE requests for a plurality of resources can be put together into one request. Accordingly, the network load can be reduced when SUBSCRIBE requests are sent to start or update subscriptions.

Moreover, in the information exchange system according to the first example, the network load can be reduced by sending a plurality of NOTIFY messages that include small content instead of sending one NOTIFY that includes large content.

Moreover, in the information exchange system according to the first example, load of interpretation of the content of one NOTIFY on the subscriber 1 can be reduced by reducing the content of the NOTIFY. Moreover, the network ioad can be reduced by sending NOTIFY messages at different points of time.

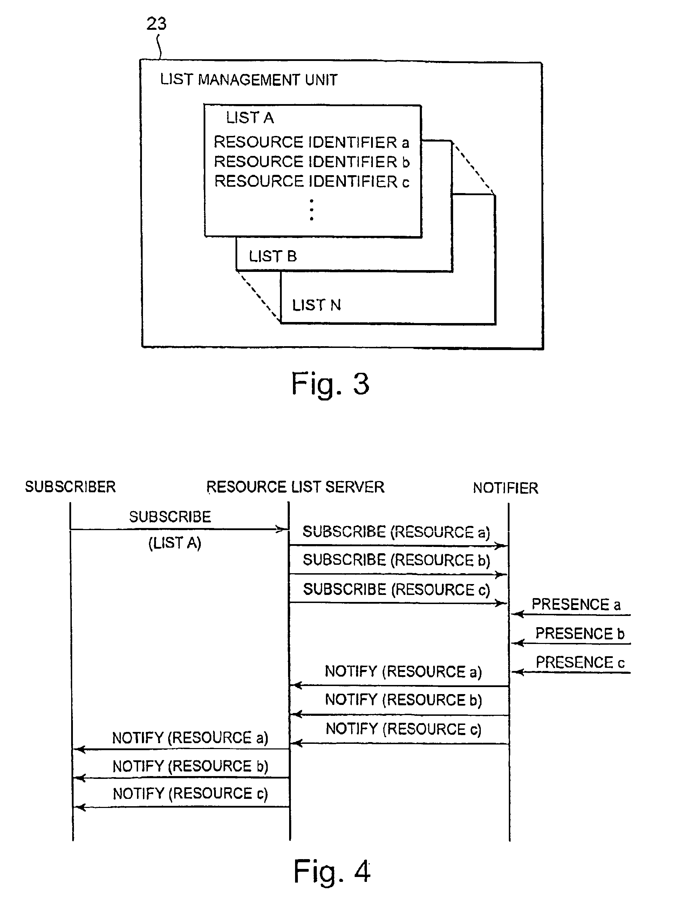

Fig. 3 shows typical list tables in the list management unit 23 in the information exchange system according to the first example.

The list management unit 23 includes list tables corresponding to lists A to N, and resource identifiers are registered in the individual list tables corresponding to the lists A to N. For example, resource identifiers a to c are registered in the list table corresponding to the list A.

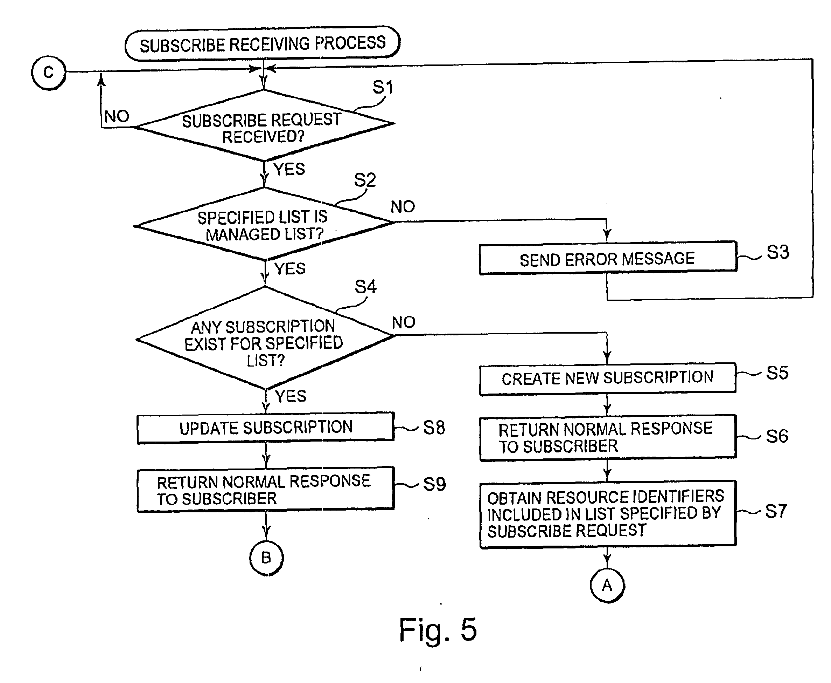

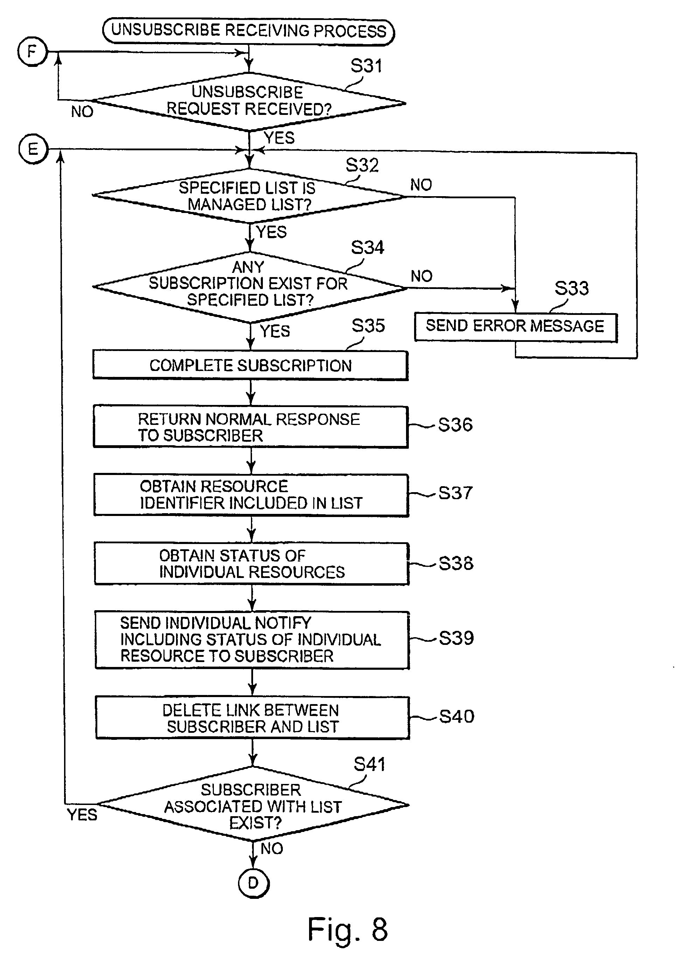

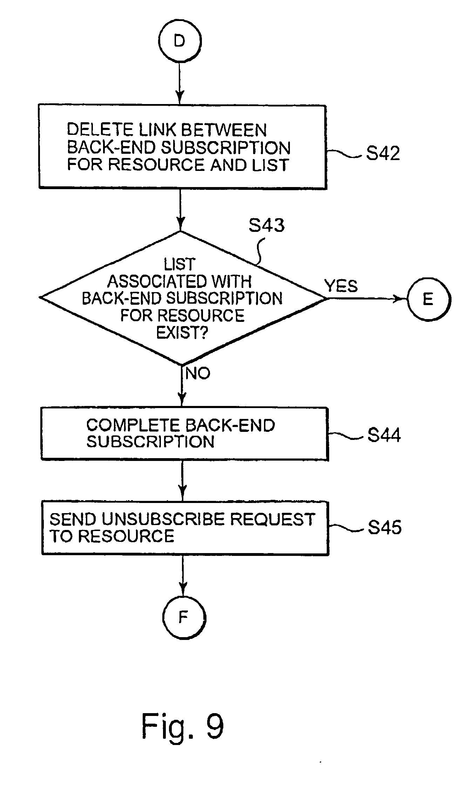

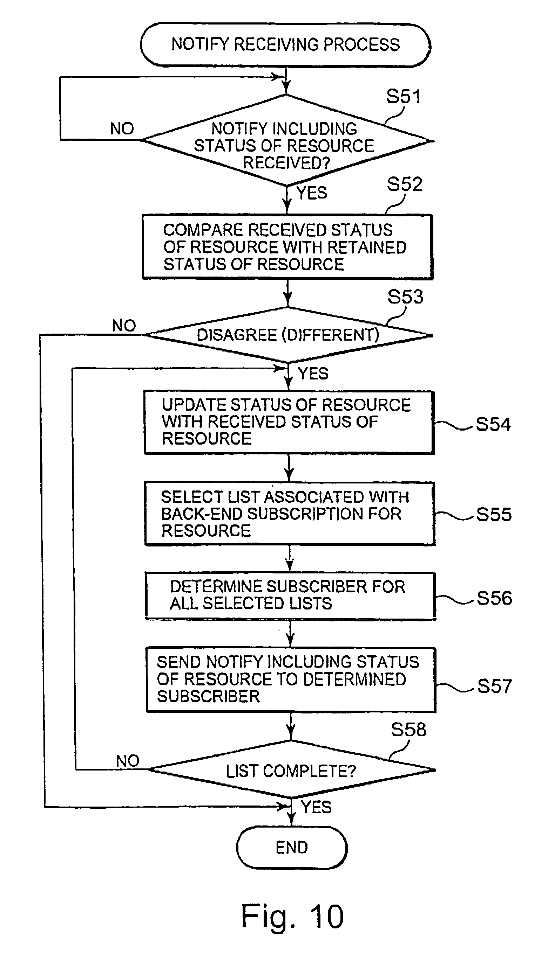

Fig. 4 is a sequence chart showing the operation of the information exchange system according the first example. Figs. 5 to 7 are flowcharts showing the process of receiving a SUBSCRIBE according to the first example. Figs. 8 and 9 are flowcharts showing the process of receiving an UNSUBSCRIBE according to the first example. Fig. 10 is a flowchart showing the process of receiving a NOTIFY according to the first example. The operation of the information exchange system according to the first example will now be described with reference to Figs. 2 to 10. The process in the resource list server 2 shown in Fig. 2 can be performed by a computer (not shown) executing programs, and the process shown in Figs. 5 to 10 can be also performed by this computer executing programs.

In the process of receiving a SUBSCRIBE, in step S1 in Fig. 5, it is determined whether the SUBSCRIBE request receiving unit 21 has received a SUBSCRIBE request from the subscriber 1. When it is determined that the SUBSCRIBE request receiving unit 21 has received a SUBSCRIBE request from the subscriber 1, the process proceeds to step S2. In step S2, the SUBSCRIBE request receiving unit 21 determines whether a specified list is managed by the list management unit 23. When the SUBSCRIBE request receiving unit 21 determines that the specified list is not managed by the list management unit 23, the process proceeds to step S3 where an error message is sent to the subscriber 1. On the other hand, when the SUBSCRIBE request receiving unit 21 determines that the specified list is managed by the list management unit 23, the SUBSCRIBE request receiving unit 21 transfers the SUBSCRIBE request to the subscription management unit 241, and the process proceeds to step S4.

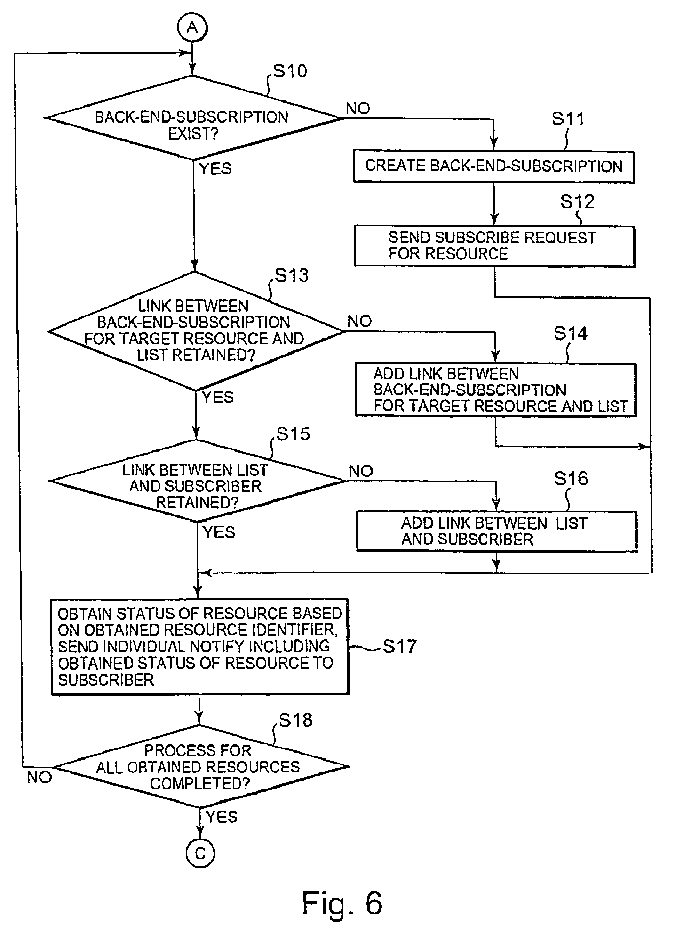

In step S4, the subscription management unit 241 determines whether any subscription exists for the specified list. When the subscription management unit 241 determines that no subscription exists for the specified list, the subscription management unit 241 creates a new subscription in step S5 and returns a normal response to the subscriber 1 in step S6. When the subscription management unit 241 creates the new subscription, in step S7, the subscription control unit 24 obtains from the list management unit 23 resource identifiers included in the list specified by the SUBSCRIBE request. Then, the following process shown in Fig. 6 is repeated for all resources corresponding to the obtained resource identifiers.

In step S10 in Fig. 6, it is determined whether any back-end subscription exists. When it is determined that no back-end subscription exists, the back-end-subscription-and-list link management unit 243 creates back-end subscriptions in step S11, and a SUBSCRIBE request for each resource is sent from the SUBSCRIBE request sending unit 25 to the notifier 3 in step S12. Then, the process proceeds to step S17.

On the other hand, when it is determined in step S10 that back-end subscriptions exist, the process proceeds to step S13. In step S13, it is determined whether the back-end-subscription-and-list link management unit 243 retains information on the links between the back-end subscriptions for target resources and the list. When it is determined that the back-end-subscription-and-list link management unit 243 does not retain information on the links between the back-end subscriptions for the target resources and the list, the back-end-subscription-and-list link management unit 243 adds information on the links between the back-end subscriptions for the target resources and the list in step S14, and the process proceeds to step S17. On the other hand, when it is determined that the back-end-subscription-and-list link management unit 243 retains information on the links between the back-end subscriptions for the target resources and the list, the process proceeds to step S15. In step S15, it is determined whether the list-and-subscriber link management unit 242 retains information on the link between the list and the subscriber 1. When it is determined that the list-and-subscriber link management unit 242 does not retain information on the link between the list and the subscriber 1, the list-and-subscriber link management unit 242 adds information on the link between the list and the subscriber 1 in step S16, and the process proceeds to step S17. When it is determined that the list-and-subscriber link management unit 242 retains information on the link between the list and the subscriber 1, the process directly proceeds to step S17.

In step S17, the subscription control unit 24 obtains information on the status of the resources through the resource status management unit 244 on the basis of the resource identifiers obtained from the list management unit 23. Then, the subscription control unit 24 individually sends a NOTIFY message that includes the obtained information to the subscriber 1 through the NOTIFY sending unit 22.

Then, in step S18, it is determined whether the aforementioned process (steps S10 to S17) has been performed on all of the resources corresponding to the obtained resource identifiers. The resource list server 2 repeats the aforementioned process until the process has been performed on all of the resources corresponding to the obtained resource identifiers.

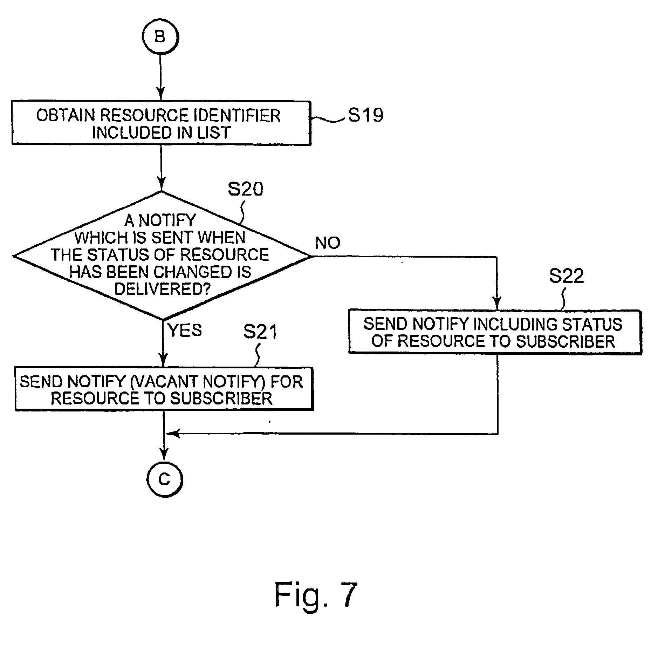

Returning back to Fig. 5, when the subscription management unit 241 determines in step S4 that a subscription exists for the specified list, the subscription management unit 241 updates the subscription in step S8 and returns a normal response to the subscriber 1 in step S9. Then, the process proceeds to step S19 in Fig. 7.

In step S19, the subscription control unit 24 obtains the resource identifiers included in the list from the list management unit 23. Then, in step S20, it is determined whether a NOTIFY that is sent when the status of a resource has changed has been delivered. When it is determined that a NOTIFY that is sent when the status of a resource has changed has been delivered, in step S21, the subscription control unit 24 individually sends a NOTIFY (vacant NOTIFY) that includes no content for a resource corresponding to the obtained resource identifier to the subscriber 1 through the NOTIFY sending unit 22. On the other hand, when it is determined that a NOTIFY that is sent when the status of a resource has changed has not been delivered, in step S22, the subscription control unit 24 individually sends a NOTIFY that includes information on the status of the resource corresponding to the obtained resource identifier to the subscriber 1 through the NOTIFY sending unit 22.

In the process of receiving an UNSUBSCRIBE, in step S31 in Fig. 8, it is determined whether the SUBSCRIBE request receiving unit 21 has received an UNSUBSCRIBE request from the subscriber 1. When it is determined that the SUBSCRIBE request receiving unit 21 has received an UNSUBSCRIBE request from the subscriber 1, the process proceeds to step S32. In step S32, the SUBSCRIBE request receiving unit 21 determines whether a specified list is managed by the list management unit 23. When the SUBSCRIBE request receiving unit 21 determines that the specified list is not managed by the list management unit 23, the process proceeds to step S33 where an error message is sent to the subscriber 1. On the other hand, when the SUBSCRIBE request receiving unit 21 determines that the specified list is managed by the list management unit 23, the SUBSCRIBE request receiving unit 21 transfers the UNSUBSCRIBE request to the subscription management unit 241, and the process proceeds to step S34.

In step S34, the subscription management unit 241 determines upon receiving the UNSUBSCRIBE request whether any subscription exists for the specified list. When the subscription management unit 241 determines that a subscription exists for the specified list, the subscription management unit 241 stops the subscription in step S35 and returns a normal response to the subscriber 1 in step S36. Then, the process proceeds to step S37. When the subscription management unit 241 determines that no subscription exists for the specified list, in step S33, the subscription management unit 241 sends an error message to the subscriber 1.

In step S37, the subscription control unit 24 obtains resource identifiers included in the list from the list management unit 23 upon stopping the subscription. Then, the subscription control unit 24 obtains information on the status of individual resources corresponding to the resource identifiers from the resource status management unit 244 in step S38 and individually sends NOTIFY messages that include the obtained information to the subscriber 1 through the NOTIFY sending unit 22 in step S39. Then, in step S40, the subscription control unit 24 deletes the link between the subscriber 1 and the list from the list-and-subscriber link management unit 242, and the process proceeds to step S41.

In step S41, it is determined whether any subscriber is associated with the list. When it is determined that no subscriber is associated with the list, the subscription control unit 24 performs the following process on back-end subscriptions for the individual resources. The back-end subscriptions are managed by the back-end-subscription-and-list link management unit 243.

In step S42 in Fig. 9, the subscription control unit 24 deletes the links between the back-end subscriptions for the resources and the list. Then, in step S43, it is determined whether any list is associated with the back-end subscriptions. When it is determined that no list is associated with the back-end subscriptions, the subscription control unit 24 stops the back-end subscriptions in step S44. Then, in step S45, the subscription control unit 24 sends UNSUBSCRIBE requests to the resources through the SUBSCRIBE request sending unit 25.

In the process of receiving a NOTIFY message, in step S51 in Fig. 10, it is determined whether the NOTIFY receiving unit 26 has received a NOTIFY that includes information on the status of a resource from the notifier 3 (for example, a presence server) for the resource. When it is determined that the NOTIFY receiving unit 26 has received a NOTIFY that includes information on the status of a resource from the notifier 3 for the resource, the NOTIFY receiving unit 26 transfers the NOTIFY to the subscription management unit 241, and the process proceeds to step S52. In step S52, the subscription management unit 241 compares the status of the resource, which has been received, with the status of the resource managed by the resource status management unit 244. Then, in step S53, the subscription management unit 241 determines whether these pieces of status information are different from each other. When the subscription management unit 241 determines that these pieces of status information are different from each other, the following process (steps S54 to S57) is performed. When the subscription management unit 241 determines that these pieces of status information agree with each other, the process of receiving a NOTIFY is completed.

In step S54, the subscription management unit 241 updates the status of the resource managed by the resource status management unit 244 with the status of the resource, which has been received. Then, in step S55, the subscription management unit 241 obtains lists associated with the back-end subscription for the resource from the back-end-subscription-and-list link management unit 243.

Then, the subscription management unit 241 determines subscribers that are managed by the list-and-subscriber link management unit 242 for all of the obtained lists in step S56 and sends a NOTIFY that includes the status of the resource to each subscriber 1, which has been determined, through the NOTIFY sending unit 22 in step S57. Then, in step S58, it is determined whether the aforementioned process (steps S54 to S57) has been performed on all resources included in the list. The process (steps S54 to S57) is repeated until the process has been performed on all resources included in the list.

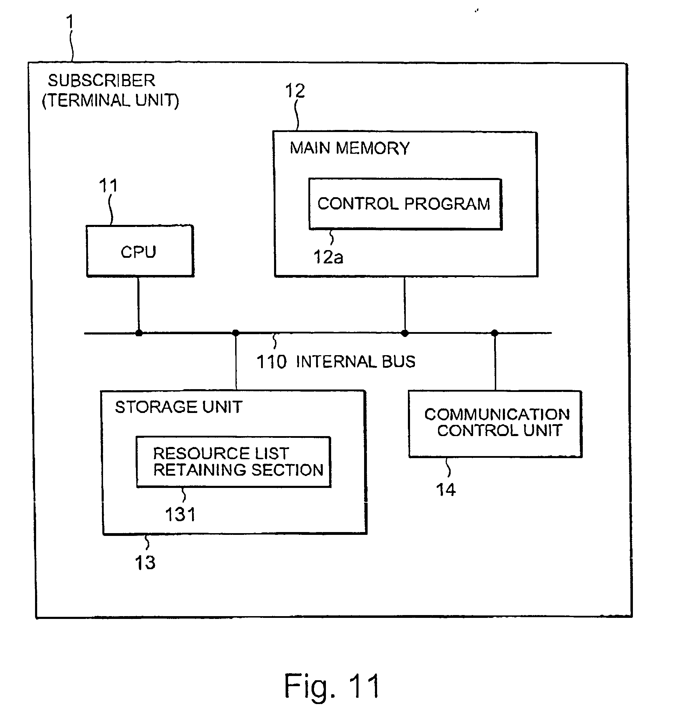

Fig. 11 is a block diagram showing the structure of the subscriber 1 in the information exchange system according to the first example.

In Fig. 11, the subscriber (terminal unit) 1 includes a central processing unit (CPU) 11, a main memory 12 that stores a control program 12a that is executed by the CPU 11, a storage unit 13 that is used as a work area when the CPU 11 executes the control program 12a, and a communication control unit 14 that controls communication with the resource list server 2. The CPU 11, the main memory 12, the storage unit 13, and the communication control unit 14 are connected to each other via an internal bus 110. The storage unit 13 includes a resource list retaining section 131 that retains resource lists that are obtained from the resource list server 2.

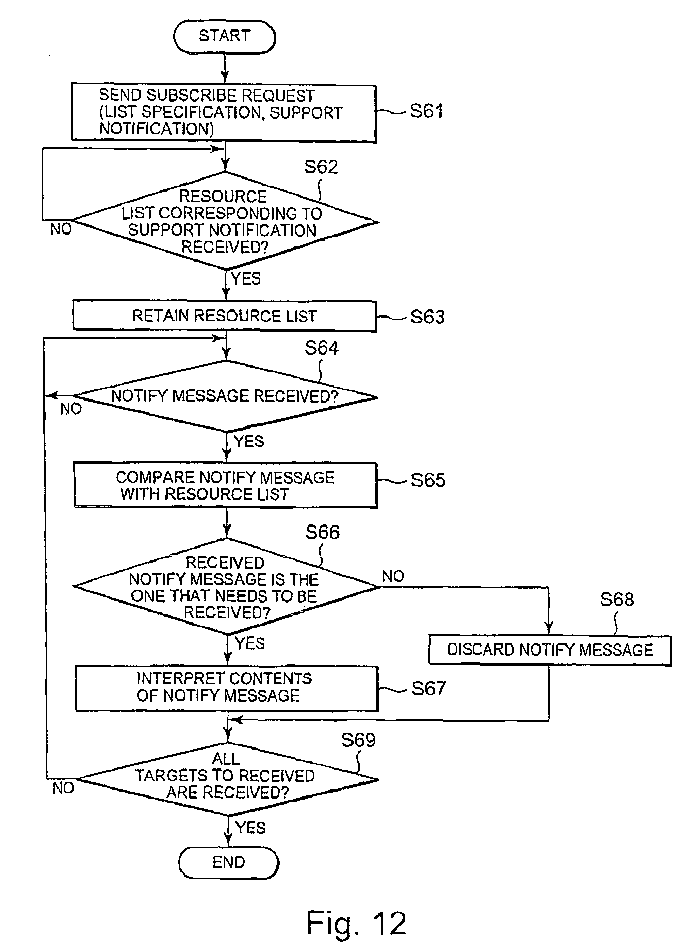

Fig. 12 is a flowchart showing typical operation of the subscriber 1 according to the first example not covered by the present invention. The operation of the subscriber 1 will now be described with reference to Figs. 11 and 12. The process shown in Fig. 12 is performed by the CPU 11 executing the control program 12a.

In step S61 in Fig. 12, the subscriber 1 sends a SUBSCRIBE request that includes list specification and a support notification to the resource list server 2. Then, in step S62, it is determined whether the subscriber 1 has received a resource list corresponding to the support notification from the resource list server 2. When it is determined that the subscriber 1 has received a resource list, corresponding to the support notification, from the resource list server 2, the subscriber 1 stores the resource list in the resource list retaining section 131 in the storage unit 13 in step S63.

Then, in step S64, it is determined whether the subscriber 1 has received a NOTIFY in response to the SUBSCRIBE request from the resource list server 2. When it is determined that the subscriber 1 has received NOTIFY messages from the resource list server 2 in response to the SUBSCRIBE request, in step S65, the subscriber 1 compares the NOTIFY messages with the resource list stored in the resource list retaining section 131.

Then, in step S66, the subscriber 1 determines whether each of the received NOTIFY messages is a NOTIFY message that needs to be received. When the subscriber 1 determines that each NOTIFY message is a NOTIFY message that needs to be received, the subscriber 1 interprets the content of each NOTIFY message in step S67, and the process proceeds to step S69. When the subscriber 1 determines that each NOTIFY message is not a NOTIFY message that needs to be received, the subscriber 1 discards the NOTIFY message in step S68, and the process proceeds to step S69. In step S69, it is determined whether the subscriber 1 has received NOTIFY messages that need to be received for all resources included in the list specified in the aforementioned SUBSCRIBE request. The subscriber 1 repeats the aforementioned process until the subscriber 1 has received NOTIFY messages that need to be received for all resources included in the list.

In the first embodiment, when notifications of the status of individual resources need to be received, SUBSCRIBE requests for a plurality of resources can be put together into one request, as described above. Thus, the network load can be reduced when SUBSCRIBE requests are sent to start or update subscriptions.

Moreover, in the first example, the network load can be reduced by sending a plurality of NOTIFY messages that include small content instead of sending one NOTIFY that includes large content. Moreover, in the first example, load of interpretation of the content of one NOTIFY on the subscriber 1 can be reduced by reducing the content of the NOTIFY Although a SUBSCRIBE request from the subscriber 1 is processed by the resource list server 2 and transferred to the notifier 3 in the present embodiment, the present embodiment is not restrictive. Even when the list management unit 23 is provided in the notifier 3 and when a SUBSCRIBE request from the subscriber 1 is transferred directly to the notifier 3, the same advantageous effects as described above can be achieved.

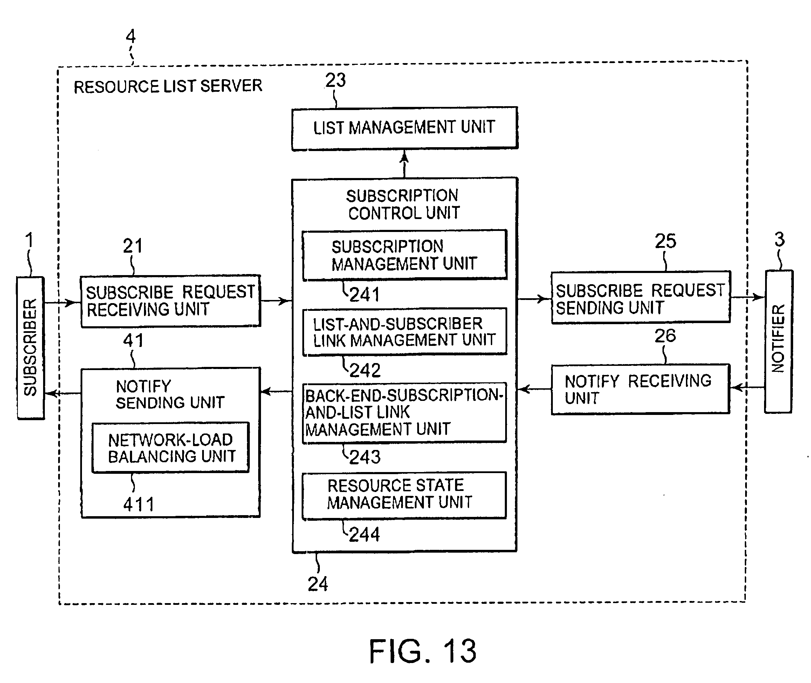

Fig. 13 is a block diagram showing the structure of an information exchange system according to a second example not covered by the present invention. In Fig. 13, the structure of the information exchange system according to the second example is the same as that of the information exchange system according to the first embodiment shown in Fig. 2 except that a network-load balancing unit 411 is provided in a NOTIFY sending unit 41 in a resource list server 4 in the information exchange system according to the second example. Thus, in Fig. 13, the same reference numerals as in Fig. 2 are assigned to the corresponding components. The operations of the corresponding components in the second example are the same as those in the first embodiment.

The network-load balancing unit 411 can reduce the network load by staggering the transmission timings of NOTIFY messages directed to the subscriber 1. Moreover, in the second example, load of processing on the subscriber 1 can be reduced.

The network-load balancing unit 411 may have the following functions:
1. A function of staggering the transmission timings of NOTIFY messages directed to the same subscriber.
2. A function of staggering the transmission timings of NOTIFY messages among a plurality of subscribers (in this function, the transmission timings of NOTIFY messages directed to the same subscriber are not staggered).
3. A function of staggering the transmission timings of NOTIFY messages without making a distinction between subscribers.

A method may be used in the network-load balancing unit 411, in which the network-load balancing unit 411 waits for a period of time that is calculated by multiplying standard transmission latency by a random number before sending individual NOTIFY messages. In this case, the standard transmission latency may be fixed or depend on the network load. In a case where the standard transmission latency depends on the network load, the higher the network load, the longer the standard transmission latency.

In the second example, the network-load balancing unit 411 is provided in the NOTIFY sending unit 41 in the resource list server 4 to stagger the transmission timings of NOTIFY messages, as described above. Thus, the network load can be reduced.

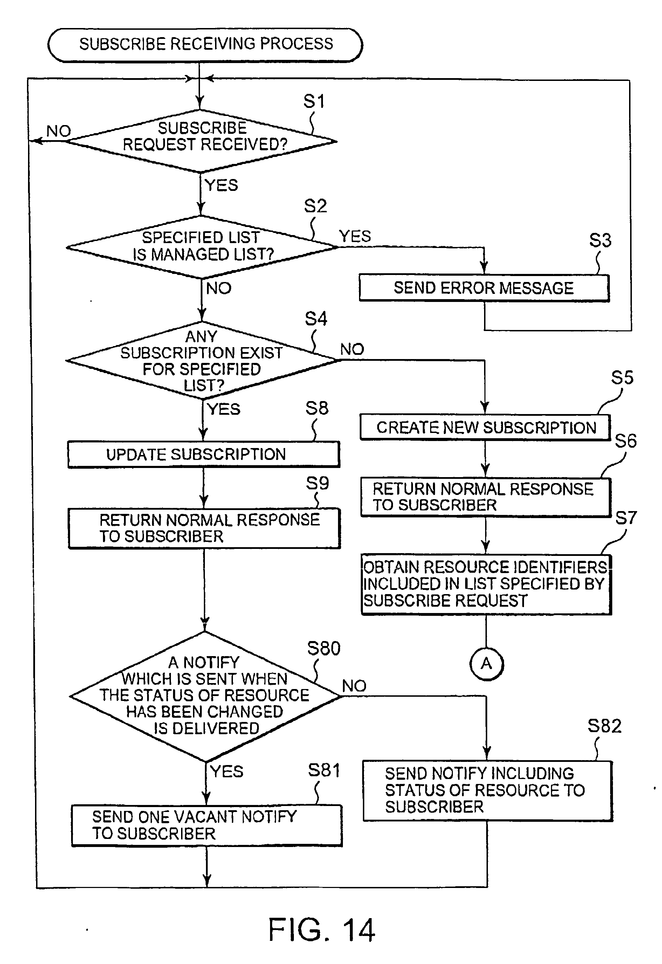

Fig. 14 is a flowchart showing the process of receiving a SUBSCRIBE (updating) according to a first embodiment of the present invention. The structure of an information exchange system according to the first embodiment is the same as that of the information exchange system according to the first example shown in Fig. 2.

The operation of the information exchange system according to the first embodiment will now be described with reference to Figs. 2 and 14. The process shown in Fig. 14 is performed by a computer executing programs, as in the first example. The information exchange system according to the first embodiment may have the same structure as the information exchange system according to the second example shown in Fig. 13.

The first embodiment is different from the first example in that a NOTIFY message that includes no content is sent for a list instead of each resources when a subscription is updated. The NOTIFY message is sent from the NOTIFY sending unit 22.

In the process of receiving a SUBSCRIBE (updating), in step S1 in Fig. 14, it is determined whether the SUBSCRIBE request receiving unit 21 has received a SUBSCRIBE request from the subscriber 1. When it is determined that the SUBSCRIBE request receiving unit 21 has received a SUBSCRIBE request from the subscriber 1, the process proceeds to step S2. In step S2, the SUBSCRIBE request receiving unit 21 determines whether a specified list is managed by the list management unit 23. When the SUBSCRIBE request receiving unit 21 determines that the specified list is not managed by the list management unit 23, the process proceeds to step S3 where an error message is sent to the subscriber 1. On the other hand, when the SUBSCRIBE request receiving unit 21 determines that the specified list is managed by the list management unit 23, the SUBSCRIBE request receiving unit 21 transfers the SUBSCRIBE request to the subscription management unit 241, and the process proceeds to step S4.

In step S4, the subscription management unit 241 determines whether any subscription exists for the specified list. When the subscription management unit 241 determines that no subscription exists for the specified list, the subscription management unit 241 creates a new subscription in step S5 and returns a normal response to the subscriber 1 in step S6. When the subscription management unit 241 creates the new subscription, in step S7, the subscription control unit 24 obtains from the list management unit 23 resource identifiers included in the list specified by the SUBSCRIBE request. Then, the aforementioned process (step S10 and subsequent steps in Fig. 6) of the first example is repeated for all resources corresponding to the obtained resource identifiers.

When the subscription management unit 241 determines in step S4 that a subscription exists for the specified list, the subscription management unit 241 updates the subscription in step S8 and returns a normal response to the subscriber 1 in step S9. Then, the process proceeds to step S80.

In step S80, it is determined whether a NOTIFY that is sent when the status of resources has changed has been delivered. When it is determined that a NOTIFY that is sent when the status of resources has changed has been delivered, in step S81, the subscription control unit 24 sends a NOTIFY that includes no content to the subscriber 1. On the other hand, when it is determined that a NOTIFY that is sent when the status of resources has changed has not been delivered, in step S82, the subscription control unit 24 sends a NOTIFY that includes information on the status of the resources to the subscriber 1.

In the first embodiment, NOTIFY messages that include no content and are sent to the subscriber 1 when a subscription is updated can be put together into one message, as described above. Thus, the network load can be reduced.

In the structure and operation according to the present invention, network load due to NOTIFY messages that are sent from the notifier 3 for resources to the subscriber 1 can be reduced.

Moreover, in the present invention, unnecessary data can be prevented from being sent through networks when subscriptions are updated.

The present invention can be applied to not only the Internet but also presence services for sending a notification of the presence or status of everything (for example, status such as "attended" or "out"), in particular, presence services in a mobile environment.

## Claims

1. An information exchange system comprising a first terminal unit (3), a second terminal unit (1), and a management server (2), which is **characterized in that**:
the first terminal unit (3) includes monitoring means that monitors the status of at least one object to be monitored and notification means that sends the management server a notification of the status of said at least one object to be monitored,
the second terminal unit (1) includes status notification request sending means, and
the management server includes transmission processing means that sends a notification signal to the second terminal unit (1), when the status notification request is updated,
**characterised in that**
the status notification request sending means are adapted to send the management server a status notification request that includes information for specifying a group of objects to be monitored, the group including said at least one object to be monitored,
the transmission processing means are adapted to send a notification signal that includes no content, and
the management server sends the notification signal by putting a plurality of notification signals that include no content together into one notification signal, when the status notification request is updated.

2. The information exchange system according to Claim 1, wherein the management server includes monitored-object status retaining means (244) that receives the status of said at least one object to be monitored from the first terminal unit (3) and retains the received status and transmission processing means that sends the second terminal unit (1) a notification signal for each of said at least one object to be monitored, the notification signal including the status of each of said at least one object to be monitored.

3. The information exchange system according to Claim 1, wherein the management server includes monitored-object status retaining means (244) that receives the status of said at least one object to be monitored from the first terminal unit (3) and retains the received status and transmission processing means that sends the second terminal unit (1) a plurality of notification signals that include the status of said at least one object to be monitored, the notification signal including the status of each of said at least one object to be monitored.

4. The information exchange system according to any one of Claims 1 to 3, wherein the management server further includes balancing means (411) that staggers transmission timings of the plurality of notification signals.

5. The information exchange system according to any one of Claims 1 to 4, wherein the second terminal unit (1) includes means that monitors the status of said at least one object to be monitored until the status notification request is canceled.

6. The information exchange system according to any one of Claims 1 to 4, wherein the second terminal unit (1) includes means that monitors the status of said at least one object to be monitored for a predetermined period of time specified by the status notification request.

7. The information exchange system according to any one of Claims 1 to 6, wherein the second terminal unit (1) further includes information obtaining means that obtains information on the group of objects to be monitored from the management server and information interpreting means that interprets the information on the group of objects to be monitored.

8. The information exchange system according to Claim 7, wherein the second terminal unit (1) includes means that sends the management server a support notification to obtain the information on the group of objects to be monitored from the management server.

9. The information exchange system according to any one of Claims 1 to 8, wherein the information for specifying the group of objects to be monitored represents identification information of a subset of said at least one object to be monitored, the identification information being managed by the management server.

10. The information exchange system according to any one of Claims 1 to 8, wherein the information for specifying the group of objects to be monitored represents at least one list of said at least one object to be monitored.

11. The information exchange system according to Claim 1, wherein the first and second terminal units are a notifier (3) and a subscriber (1), respectively,
the notifier (3) includes monitoring means that monitors the status of at least one resource and notification means that sends the management server a notification of the status of said at least one resource with a first NOTIFY message,
the subscriber (1) includes SUBSCRIBE request sending means that sends the management server a SUBSCRIBE request that includes information for specifying a group of resources, the group including said at least one resource, and
the management server includes transmission processing means that sends a second NOTIFY message that includes no content to the subscriber (1), when the SUBSCRIBE request is updated.

12. The information exchange system according to Claim 11, wherein the management server includes means that sends the second NOTIFY message by putting a plurality of second NOTIFY messages that include no content together into one second NOTIFY message, when the SUBSCRIBE request is updated.

13. The information exchange system according to Claim 11 or 12, wherein the management server includes resource status retaining means (244) that receives the status of said at least one resource sent from the notifier (3) with the first NOTIFY message and retains the received status and transmission processing means that sends the subscriber (1) the second NOTIFY message for each of said at least one resource, the second NOTIFY message including the status of each of said at least one resource.

14. The information exchange system according to Claim 11 or 12, wherein the management server includes resource status retaining means (244) that receives the status of said at least one resource sent from the notifier (3) with the first NOTIFY message and retains the received status and transmission processing means that sends the subscriber (1) a plurality of NOTIFY messages, as said second NOTIFY message, that include the status of said at least one resource.

15. The information exchange system according to any one of Claims 11 to 14, wherein the management server further includes balancing means that staggers transmission timings of the plurality of NOTIFY messages.

16. The information exchange system according to any one of Claims 11 to 15, wherein the subscriber (1) includes means that monitors the status of said at least one resource until the SUBSCRIBE request is canceled.

17. The information exchange system according to any one of Claims 11 to 15, wherein the subscriber (1) includes means that monitors the status of said at least one resource for a predetermined period of time specified by the SUBSCRIBE request.

18. The information exchange system according to any one of Claims 11 to 17, wherein the subscriber (1) further includes information obtaining means that obtains information on the group of resources from the management server and information interpreting means that interprets the information on the group of resources.

19. The information exchange system according to Claim 18, wherein the subscriber (1) includes means that sends the management server a support notification to obtain the information on the group of resources from the management server.

20. The information exchange system according to any one of Claims 11 to 19, wherein the information for specifying the group of resources represents identification information of a subset of said at least one resource, the identification information being managed by the management server.

21. The information exchange system according to any one of Claims 11 to 19, wherein the information for specifying the group of resources represents at least one list of said at least one resource.

22. A management server for an information exchange system including a first terminal unit and a second terminal unit, which is **characterized in that**:
the first terminal unit includes monitoring means that monitors the status of at least one object to be monitored and notification means that sends a notification of the status of said at least one object to be monitored,
the second terminal unit includes status notification request sending means, and
the management server includes transmission processing means that sends a notification signal, when the status notification request is updated,
**characterised in that**
the status notification request sending means are adapted to sends a status notification request that includes information for specifying a group of objects to be monitored, the group including said at least one object to be monitored,
the transmission processing means are adapted to send a notification signal that includes no content to the second terminal unit, and
the management server sends the notification signal by putting a plurality of notification signals that include no content together into one notification signal, when the status notification request is updated.

23. The management server according to Claim 22, wherein the management server includes monitored-object status retaining means that receives the status of said at least one object to be monitored from the first terminal unit and retains the received status and transmission processing means that sends the second terminal unit a notification signal for each of said at least one object to be monitored, the notification signal including the status of each of said at least one object to be monitored.

24. The management server according to Claim 22, wherein the management server includes monitored-object status retaining means that receives the status of said at least one object to be monitored from the first terminal unit and retains the received status and transmission processing means that sends the second terminal unit a plurality of notification signals that include the status of said at least one object to be monitored, the notification signal including the status of each of said at least one object to be monitored.

25. The management server according to any one of Claims 22 to 24, further comprising balancing means that staggers transmission timings of the plurality of notification signals.

26. The management server according to any one of Claims 22 to 25, wherein the information for specifying the group of objects to be monitored represents identification information of a subset of said at least one object to be monitored, the identification information being managed by the management server.

27. The management server according to any one of Claims 22 to 25, wherein the information for specifying the group of objects to be monitored represents at least one list of said at least one object to be monitored.

28. The management server according to Claim 22, wherein the information exchange system includes a notifier (3) and a subscriber (1) as the first and second terminal units, respectively,
the notifier (3) includes monitoring means that monitors the status of at least one resource and notification means that sends a notification of the status of said at least one resource with a first NOTIFY message,
the subscriber (1) includes SUBSCRIBE request sending means that sends a SUBSCRIBE request that includes information for specifying a group of resources, the group including said at least one resource, and
the management server includes transmission processing means that sends a second NOTIFY message that includes no content to the subscriber (1), when the SUBSCRIBE request is updated.

29. The management server according to Claim 28, wherein the management server includes means that sends the second NOTIFY message by putting a plurality of second NOTIFY messages that include no content together into one second NOTIFY message, when the SUBSCRIBE request is updated.

30. The management server according to Claim 28 or 29, the management server includes resource status retaining means that receives the status of said at least one resource sent from the notifier (3) with the first NOTIFY message and retains the received status and transmission processing means that sends the subscriber (1) the second NOTIFY message for each of said at least one resource, the second NOTIFY message including the status of each of said at least one resource.

31. The management server according to Claim 28 or 29, wherein the management server includes resource status retaining means that receives the status of said at least one resource sent from the notifier (3) with the first NOTIFY message and retains the received status and transmission processing means that sends the subscriber (1) a plurality of NOTIFY messages, as said second NOTIFY message, that include the status of said at least one resource.

32. The management server according to any one of Claims 28 or 31, further comprising balancing means that staggers transmission timings of the plurality of NOTIFY messages.

33. The management server according to any one of Claims 28 or 32, wherein the information for specifying the group of resources represents identification information of a subset of said at least one resource, the identification information being managed by the management server.

34. The management server according to any one of Claims 28 to 32, wherein the information for specifying the group of resources represents at least one list of said at least one resource.

35. A method for reducing network load, the method being applied to an information exchange system that includes a first terminal unit (3), a second terminal unit (1), and a management server (2), which is **characterized in that**:
the first terminal unit (3) includes monitoring means that monitors the status of at least one object to be monitored and notification means that sends a notification of the status of said at least one object to be monitored,
the second terminal unit (1) includes status notification request sending means that sends a status notification request that includes information for specifying a group of objects to be monitored, the group including said at least one object to be monitored,
**characterised in that** the method comprises:
a step in the management server of sending a notification signal that includes no content to the second terminal unit (1), when the status notification request is updated,
wherein the management server sends the notification signal by putting a plurality of notification signals that include no content together into one notification signal, when the status notification request is updated.

36. The method according to Claim 35, wherein the management server receives the status of said at least one object to be monitored from the first terminal unit (3) and retaining the received status in monitored-object status retaining means (244), the management server further sending the second terminal unit (1) a notification signal for each of said at least one object to be monitored, the notification signal including the status of each of said at least one object to be monitored.

37. The method according to Claim 35, wherein the management server receives the status of said at least one object to be monitored from the first terminal unit (3) and retaining the received status in monitored-object status retaining means (244), the management server further sending the second terminal unit (1) a plurality of notification signals that include the status of said at least one object to be monitored to the second terminal unit (1).

38. The method according to any one of Claims 35 to 37, wherein the management server staggers transmission timings of the notification signals.

39. The method according to any one of Claims 35 to 38, wherein the second terminal unit (1) monitors the status of said at least one object to be monitored until the status notification request is canceled.

40. The method according to any one of Claims 35 to 38, wherein the second terminal unit (1) monitors the status of said at least one object to be monitored for a predetermined period of time specified by the status notification request.

41. The method according to any one of Claims 35 to 40, wherein the second terminal unit (1) obtains information on the group of objects to be monitored from the management server and interprets the information on the group of objects to be monitored.

42. The method according to Claim 41, wherein the second terminal unit (1) sends the management server a support notification to obtain the information on the group of objects to be monitored from the management server.

43. The method according to any one of Claims 35 to 42, wherein the information for specifying the group of objects to be monitored represents identification information of a subset of said at least one object to be monitored, the identification information being managed by the management server.

44. The method according to any one of Claims 35 to 42, wherein the information for specifying the group of objects to be monitored represents at least one list of said at least one object to be monitored.

45. The method according to Claim 35, wherein the information exchange system includes a notifier (3) and a subscriber (1) as the first and second terminal units,
the notifier (3) includes monitoring means that monitors the status of at least one resource and notification means that sends a notification of the status of said at least one resource with a first NOTIFY message, and
the subscriber (1) includes SUBSCRIBE request sending means that sends a SUBSCRIBE request that includes information for specifying a group of resources, the group including said at least one resource,
the method comprising:
a step in the management server of sending a second NOTIFY message that includes no content to the subscriber (1), when the SUBSCRIBE request is updated.

46. The method according to Claim 45, wherein the management server sends the second NOTIFY message by putting a plurality of second NOTIFY messages that include no content together into one second NOTIFY message, when the status notification request is updated.

47. The method according to Claim 45 or 46, wherein the management server receives the status of said at least one resource sent from the notifier (3) with the first NOTIFY message and retaining the received status in resource status retaining means (244), the management server further sending the subscriber (1) the second NOTIFY message for each of said at least one resource, the second NOTIFY message including the status of each of said at least one resource.

48. The method according to Claim 45 or 46, wherein the management server receives the status of said at least one resource sent from the notifier (3) with the first NOTIFY message and retaining the received status in resource status retaining means (244), the management server further sending the subscriber (1) a plurality of NOTIFY messages that include the status of said at least one resource.

49. The method according to any one of Claims 45 to 48, wherein the management server staggers transmission timings of the NOTIFY messages.

50. The method according to any one of Claims 45 to 49, wherein the subscriber (1) monitors the status of said at least one resource until the SUBSCRIBE request is canceled.

51. The method according to any one of Claims 45 to 49, wherein the subscriber (1) monitors the status of said at least one resource for a predetermined period of time specified by the SUBSCRIBE request.

52. The method according to any one of Claims 45 to 51, wherein the subscriber (1) obtains information on the group of resources from the management server and interprets the information on the group of resources.

53. The method according to Claim 52, wherein the subscriber (1) sends the management server a support notification to obtain the information on the group of resources from the management server.

54. The method according to any one of Claims 45 to 53, wherein the information for specifying the group of resources represents identification information of a subset of said at least one resource, the identification information being managed by the management server.

55. The method according to any one of Claim 45 to 53, wherein the information for specifying the group of resources represents at least one list of said at least one resource.

## Patentansprüche

1. Informationsaustauschsystem umfassend eine erste Endgeräteinheit (3), eine zweite Endgeräteinheit (1) und einen Verwaltungsserver, das **dadurch gekennzeichnet ist, dass**
die erste Endgeräteinheit (3) ein Überwachungsmittel, das den Zustand von mindestens einem zu überwachenden Objekt überwacht, und ein Benachrichtigungsmittel, das dem Verwaltungsserver eine Benachrichtigung über den Zustand des mindestens einen zu überwachenden Objekts sendet, umfasst,
die zweite Endgeräteinheit (1) Zustandsbenachrichtigungsabfrage-Sendemittel umfasst, und
der Verwaltungsserver ein Übertragungsverarbeitungsmittel umfasst, das ein Benachrichtigungssignal an die zweite Endgeräteinheit (1) sendet, wenn die Zustandsbenachrichtigungsabfrage aktualisiert wird,
**dadurch gekennzeichnet, dass**
die Zustandsbenachrichtigungsabfrage-Sendemittel eingerichtet sind, um dem Verwaltungsserver eine Zustandsbenachrichtigungsabfrage zu senden, die Informationen zum Bestimmen einer Gruppe von zu überwachenden Objekten umfasst, wobei die Gruppe das mindestens eine zu überwachende Objekt umfasst,
die Übertragungsverarbeitungsmittel eingerichtet sind, um ein Benachrichtigungssignal zu senden, das keinen Inhalt aufweist, und
der Verwaltungsserver das Benachrichtigungssignal sendet, indem eine Mehrzahl von Benachrichtigungssignalen, die keinen Inhalt aufweisen, in ein Benachrichtigungssignal zusammengefügt werden, wenn die Zustandsbenachrichtigungsabfrage aktualisiert wird.

2. Informationsaustauschsystem nach Anspruch 1, wobei der Verwaltungsserver ein Zustandshaltemittel (244) für das überwachte Objekt, das den Zustand des mindestens einen zu überwachenden Objekts von der ersten Endgeräteinheit (3) empfängt und den empfangenen Zustand hält, und ein Übertragungsverarbeitungsmittel, das der zweiten Endgeräteinheit (1) ein Benachrichtigungssignal für jedes des mindestens einen zu überwachenden Objekts sendet, umfasst, wobei das Benachrichtigungssignal den Zustand jedes des mindestens einen zu überwachenden Objekts umfasst.

3. Informationsaustauschsystem nach Anspruch 1, wobei der Verwaltungsserver ein Zustandshaltemittel (244) für das überwachte Objekt, das den Zustand des mindestens einen zu überwachenden Objekts von der ersten Endgeräteinheit (3) empfängt und den empfangenen Zustand hält, und ein Übertragungsverarbeitungsmittel, das der zweiten Endgeräteinheit (1) eine Mehrzahl Benachrichtigungssignale sendet, die den Zustand des mindestens einen zu überwachenden Objekte umfassen, umfasst, wobei das Benachrichtigungssignal den Zustand jedes des mindestens einen zu überwachenden Objekts umfasst.

4. Informationsaustauschsystem nach einem der Ansprüche 1 bis 3, wobei der Verwaltungsserver weiterhin ein Abgleichmittel (411) umfasst, das Übertragungszeiten der Mehrzahl Benachrichtigungssignale staffelt.

5. Informationsaustauschsystem nach einem der Ansprüche 1 bis 4, wobei die zweite Endgeräteinheit (1) ein Mittel umfasst, das den Zustand des mindestens einen zu überwachenden Objekts überwacht, bis die Zustandsbenachrichtigungsabfrage gelöscht wird.

6. Informationsaustauschsystem nach einem der Ansprüche 1 bis 4, wobei die zweite Endgeräteinheit (1) ein Mittel umfasst, das den Zustand des mindestens einen zu überwachenden Objekts für eine vorbestimmte Zeitdauer überwacht, die von der Zustandsbenachrichtigungsabfrage bestimmt wird.

7. Informationsaustauschsystem nach einem der Ansprüche 1 bis 6, wobei die zweite Endgeräteinheit (1) weiterhin ein Informationserhaltemittel, das Informationen über die Gruppe von zu überwachenden Objekten von dem Verwaltungsserver erhält, und ein Informationsinterpretationsmittel, das die Informationen über die Gruppe von zu überwachenden Objekten interpretiert, umfasst.

8. Informationsaustauschsystem nach Anspruch 7, wobei die zweite Endgeräteinheit (1) ein Mittel umfasst, das dem Verwaltungsserver eine Unterstützungsbenachrichtigung sendet, um die Informationen über die Gruppe von zu überwachenden Objekten von dem Verwaltungsserver zu erhalten.

9. Informationsaustauschsystem nach einem der Ansprüche 1 bis 8, wobei die Informationen zum Bestimmen der Gruppe von zu überwachenden Objekten Identifikationsinformationen über einen Teilsatz des mindestens einen zu überwachenden Objekts wiedergeben, wobei die Identifikationsinformationen von dem Verwaltungsserver verwaltet werden.

10. Informationsaustauschsystem nach einem der Ansprüche 1 bis 8, wobei die Informationen zum Bestimmen der Gruppe von zu überwachenden Objekten mindestens eine Liste des mindestens einen zu überwachenden Objekts wiedergeben.

11. Informationsaustauschsystem nach Anspruch 1, wobei die ersten und zweiten Endgeräteinheiten ein Melder (3) bzw. ein Teilnehmer (1) sind,
der Melder (3) ein Überwachungsmittel, das den Zustand mindestens einer Ressource überwacht, und ein Benachrichtigungsmittel, das dem Verwaltungsserver mit einer ersten NOTIFY-Mitteilung eine Benachrichtigung über den Zustand der mindestens einen Ressource sendet, umfasst,
der Teilnehmer (1) ein Mittel zum Senden einer SUBSCRIBE-Abfrage umfasst, das dem Verwaltungsserver eine SUBSCRIBE-Abfrage sendet, die Informationen zum Bestimmen einer Gruppe von Ressourcen umfasst, wobei die Gruppe die mindestens eine Ressource umfasst, und
der Verwaltungsserver ein Übertragungsverarbeitungsmittel umfasst, das dem Teilnehmer (1) eine zweite NOTIFY-Mitteilung sendet, die keinen Inhalt aufweist, wenn die SUBSCRIBE-Abfrage aktualisiert wird.

12. Informationsaustauschsystem nach Anspruch 11, wobei der Verwaltungsserver ein Mittel umfasst, das die zweite NOTIFY-Mitteilung sendet, indem eine Mehrzahl zweiter NOTIFY-Mitteilungen, die keinen Inhalt aufweisen, in eine zweite NOTIFY-Mitteilung zusammengefügt werden, wenn die SUBSCRIBE-Abfrage aktualisiert wird.

13. Informationsaustauschsystem nach Anspruch 11 oder 12, wobei der Verwaltungsserver ein Ressourcenzustandshaltemittel (244), das den Zustand der mindestens einen Ressource empfängt, der von dem Melder (3) mit der ersten NOTIFY-Mitteilung gesendet wird, und den empfangenen Zustand hält, und ein Übertragungsverarbeitungsmittel, das dem Teilnehmer (1) die zweite NOTIFY-Mitteilung für jede der mindestens einen Ressourse sendet, umfasst, wobei die zweite NOTIFY-Mitteilung den Zustand jeder der mindestens einen Ressource umfasst.

14. Informationsaustauschsystem nach Anspruch 11 oder 12, wobei der Verwaltungsserver ein Ressourcenzustandshaltemittel (244), das den Zustand der mindestens einen Ressource empfängt, der von dem Melder (3) mit der ersten NOTIFY-Mitteilung gesendet wird, und den empfangenen Zustand hält, und ein Übertragungsverarbeitungsmittel, das dem Teilnehmer (1) als die zweite NOTIFY-Mitteilung eine Mehrzahl NOTIFY-Mitteilungen sendet, die den Zustand der mindestens einen Ressource umfassen.

15. Informationsaustauschsystem nach einem der Ansprüche 11 bis 14, wobei der Verwaltungsserver weiterhin ein Abgleichmittel umfasst, das Übertragungszeiten der Mehrzahl NOTIFY-Mitteilungen staffelt.

16. Informationsaustauschsystem nach einem der Ansprüche 11 bis 15, wobei der Teilnehmer (1) ein Mittel umfasst, das den Zustand der mindestens einen Ressource überwacht, bis die SUBSCRIBE-Abfrage gelöscht wird.

17. Informationsaustauschsystem nach einem der Ansprüche 11 bis 15, wobei der Teilnehmer (1) ein Mittel umfasst, das den Zustand der mindestens einen Ressource für eine vorbestimmte Zeitdauer überwacht, die von der SUBSCRIBE-Abfrage bestimmt wird.

18. Informationsaustauschsystem nach einem der Ansprüche 11 bis 17, wobei der Teilnehmer (1) weiterhin ein Informationserhaltemittel, das Informationen über die Gruppe von Ressourcen von dem Verwaltungsserver erhält, und ein Informationsinterpretationsmittel, das die Informationen über die Gruppe von Ressourcen interpretiert, umfasst.

19. Informationsaustauschsystem nach Anspruch 18, wobei der Teilnehmer (1) ein Mittel umfasst, das dem Verwaltungsserver eine Unterstützungsbenachrichtigung sendet, um die Informationen über die Gruppe von Ressourcen von dem Verwaltungsserver zu erhalten.

20. Informationsaustauschsystem nach einem der Ansprüche 11 bis 19, wobei die Informationen zum Bestimmen der Gruppe von Ressourcen Identifikationsinformationen über einen Teilsatz der mindestens einen Ressource wiedergeben, wobei die Identifikationsinformationen von dem Verwaltungsserver verwaltet werden.

21. Informationsaustauschsystem nach einem der Ansprüche 11 bis 19, wobei die Informationen zum Bestimmen der Gruppe von Ressourcen mindestens eine Liste der mindestens einen Ressource wiedergeben.

22. Verwaltungsserver für ein Informationsaustauschsystem, umfassend eine erste Endgeräteinheit und eine zweite Endgeräteinheit, der **dadurch gekennzeichnet ist, dass**:
die erste Endgeräteinheit ein Überwachungsmittel, das den Zustand von mindestens einem zu überwachenden Objekt überwacht, und ein Benachrichtigungsmittel, das dem Verwaltungsserver eine Benachrichtigung über den Zustand des mindestens einen zu überwachenden Objekts sendet, umfasst,
die zweite Endgeräteinheit ein Zustandsbenachrichtigungsabfrage-Sendemittel umfasst, und
der Verwaltungsserver ein Übertragungsverarbeitungsmittel umfasst, das ein Benachrichtigungssignal sendet, wenn die Zustandsbenachrichtigungsabfrage aktualisiert wird,
**dadurch gekennzeichnet, dass**
die Zustandsbenachrichtigungsabfrage-Sendemittel eingerichtet sind, um eine Zustandsbenachrichtigungsabfrage zu senden, die Informationen zum Bestimmen einer Gruppe von zu überwachenden Objekten umfasst, wobei die Gruppe das mindestens eine zu überwachende Objekt umfasst,
die Übertragungsverarbeitungsmittel eingerichtet sind, um ein Benachrichtigungssignal an die zweite Endgeräteeinheit zu senden, das keinen Inhalt aufweist, und
der Verwaltungsserver das Benachrichtigungssignal sendet, indem eine Mehrzahl von Benachrichtigungssignalen, die keinen Inhalt aufweisen, in ein Benachrichtigungssignal zusammengefügt werden, wenn die Zustandsbenachrichtigungsabfrage aktualisiert wird.

23. Verwaltungsserver nach Anspruch 22, wobei der Verwaltungsserver ein Zustandshaltemittel für das überwachte Objekt, das den Zustand des mindestens einen zu überwachenden Objekts von der ersten Endgeräteinheit empfängt und den empfangenen Zustand hält, und ein Übertragungsverarbeitungsmittel, das der zweiten Endgeräteinheit ein Benachrichtigungssignal für jedes des mindestens einen zu überwachenden Objekts sendet, umfasst, wobei das Benachrichtigungssignal den Zustand jedes des mindestens einen zu überwachenden Objekts umfasst.

24. Verwaltungsserver nach Anspruch 22, wobei der Verwaltungsserver ein Zustandshaltemittel für das überwachte Objekt, das den Zustand des mindestens einen zu überwachenden Objekts von der ersten Endgeräteinheit empfängt und den empfangenen Zustand hält, und ein Übertragungsverarbeitungsmittel, das der zweiten Endgeräteinheit eine Mehrzahl Benachrichtigungssignale sendet, die den Zustand des mindestens einen zu überwachenden Objekts umfassen, umfasst, wobei das Benachrichtigungssignal den Zustand jedes des mindestens einen zu überwachenden Objekts umfasst.

25. Verwaltungsserver nach einem der Ansprüche 22 bis 24, weiterhin umfassend ein Abgleichmittel, das Übertragungszeiten der Mehrzahl Benachrichtigungssignale staffelt.

26. Verwaltungsserver nach einem der Ansprüche 22 bis 25, wobei die Informationen zum Bestimmen der Gruppe von zu überwachenden Objekten Identifikationsinformationen über einen Teilsatz des mindestens einen zu überwachenden Objekts wiedergeben, wobei die Identifikationsinformationen von dem Verwaltungsserver verwaltet werden.

27. Verwaltungsserver nach einem der Ansprüche 22 bis 25, wobei die Informationen zum Bestimmen der Gruppe von zu überwachenden Objekten mindestens eine Liste des mindestens einen zu überwachenden Objekts wiedergeben.

28. Verwaltungsserver nach Anspruch 22, wobei das Informationsaustauschsystem als erste und zweite Endgeräteinheiten einen Melder (3) bzw. einen Teilnehmer (1) umfasst,
der Melder (3) ein Überwachungsmittel, das den Zustand mindestens einer Ressource überwacht, und ein Benachrichtigungsmittel, das mit einer ersten NOTIFY-Mitteilung eine Benachrichtigung über den Zustand der mindestens einen Ressource sendet, umfasst,
der Teilnehmer (1) ein Mittel zum Senden einer SUBSCRIBE-Abfrage umfasst, das eine SUBSCRIBE-Abfrage sendet, die Informationen zum Bestimmen einer Gruppe von Ressourcen umfasst, wobei die Gruppe die mindestens eine Ressource umfasst, und
der Verwaltungsserver ein Übertragungsverarbeitungsmittel umfasst, das dem Teilnehmer (1) eine zweite NOTIFY-Mitteilung sendet, die keinen Inhalt aufweist, wenn die SUBSCRIBE-Abfrage aktualisiert wird.

29. Verwaltungsserver nach Anspruch 28, wobei der Verwaltungsserver ein Mittel umfasst, das die zweite NOTIFY-Mitteilung sendet, indem eine Mehrzahl zweiter NOTIFY-Mitteilungen, die keinen Inhalt aufweisen, in eine zweite NOTIFY-Mitteilung zusammengefügt werden, wenn die SUBSCRIBE-Abfrage aktualisiert wird.

30. Verwaltungsserver nach Anspruch 28 oder 29, wobei der Verwaltungsserver ein Ressourcenzustandshaltemittel, das den Zustand der mindestens einen Ressource empfängt, der von dem Melder (3) mit der ersten NOTIFY-Mitteilung gesendet wird, und den empfangenen Zustand hält, und ein Übertragungsverarbeitungsmittel, das dem Teilnehmer (1) die zweite NOTIFY-Mitteilung für jede der mindestens einen Ressourse sendet, umfasst, wobei die zweite NOTIFY-Mitteilung den Zustand jeder der mindestens einen Ressource umfasst.

31. Verwaltungsserver nach Anspruch 28 oder 29, wobei der Verwaltungsserver ein Ressourcenzustandshaltemittel, das den Zustand der mindestens einen Ressource empfängt, der von dem Melder (3) mit der ersten NOTIFY-Mitteilung gesendet wird, und den empfangenen Zustand hält, und ein Übertragungsverarbeitungsmittel, das dem Teilnehmer (1) als die zweite NOTIFY-Mitteilung eine Mehrzahl NOTIFY-Mitteilungen sendet, die den Zustand der mindestens einen Ressource umfassen.

32. Verwaltungsserver nach einem der Ansprüche 28 bis 31, weiterhin umfassend ein Abgleichmittel, das Übertragungszeiten der Mehrzahl NOTIFY-Mitteilungen staffelt.

33. Verwaltungsserver nach einem der Ansprüche 28 oder 32, wobei die Informationen zum Bestimmen der Gruppe von Ressourcen Identifikationsinformationen über einen Teilsatz der mindestens einen Ressource wiedergeben, wobei die Identifikationsinformationen von dem Verwaltungsserver verwaltet werden.

34. Verwaltungsserver nach einem der Ansprüche 28 bis 32, wobei die Informationen zum Bestimmen der Gruppe von Ressourcen mindestens eine Liste der mindestens einen Ressource wiedergeben.

35. Verfahren zur Verringerung der Netzwerkbelastung, wobei das Verfahren in einem Informationsaustauschsystem angewendet wird, das eine erste Endgeräteinheit (3), eine zweite Endgeräteinheit (1) und einen Management-Server (2) umfasst, das **dadurch gekennzeichnet, dass**:
die erste Endgeräteinheit (3) ein Überwachungsmittel, das den Zustand mindestens eines zu überwachenden Objekts überwacht, und ein Benachrichtigungsmittel, das eine Benachrichtigung über den Zustand des mindestens einen zu überwachenden Objekts sendet, umfasst,
die zweite Endgeräteinheit (1) ein Zustandsbenachrichtigungsabfrage-Sendemittel umfasst, das eine Zustandsbenachrichtigungsabfrage sendet, die Informationen zum Bestimmen einer Gruppe von zu überwachenden Objekten umfasst, wobei die Gruppe das mindestens eine zu überwachende Objekt umfasst,
**dadurch gekennzeichnet, dass** das Verfahren umfasst:
einen Schritt in dem Verwaltungsserver des Sendens eines Benachrichtigungssignals, das keinen Inhalt aufweist, an die zweite Endgeräteinheit (1), wenn die Zustandsbenachrichtigungsabfrage aktualisiert wird,
wobei der Verwaltungsserver das Benachrichtigungssignal sendet, indem eine Mehrzahl Benachrichtigungssignale, die keinen Inhalt aufweisen, in ein Benachrichtigungssignal zusammengefügt werden, wenn die Zustandsbenachrichtigungsabfrage aktualisiert wird.

36. Verfahren nach Anspruch 35, wobei der Verwaltungsserver den Zustand des mindestens einen zu überwachenden Objekts von der ersten Endgeräteinheit (3) empfängt und den empfangenen Zustand in einem Zustandshaltemittel (244) für das zu überwachende Objekt hält, wobei der Verwaltungsserver weiterhin der zweiten Endgeräteinheit (1) ein Benachrichtigungssignal für jedes des mindestens einen zu überwachenden Objekts sendet, wobei das Benachrichtigungssignal den Zustand jedes des mindestens einen zu überwachenden Objekts umfasst.

37. Verfahren nach Anspruch 35, wobei der Verwaltungsserver den Zustand des mindestens einen zu überwachenden Objekts von der ersten Endgeräteinheit (3) empfängt und den empfangenen Zustand in einem Zustandshaltemittel (244) für das zu überwachende Objekt hält, wobei der Verwaltungsserver weiterhin der zweiten Endgeräteinheit (1) eine Mehrzahl Benachrichtigungssignale sendet, die den Zustand des mindestens einen zu überwachenden Objekte umfassen.

38. Verfahren nach einem der Ansprüche 35 bis 37, wobei der Verwaltungsserver Übertragungszeiten der Benachrichtigungssignale staffelt.

39. Verfahren nach einem der Ansprüche 35 bis 38, wobei die zweite Endgeräteinheit (1) den Zustand des mindestens einen zu überwachenden Objekts überwacht, bis die Zustandsbenachrichtigungsabfrage gelöscht wird.

40. Verfahren nach einem der Ansprüche 35 bis 38, wobei die zweite Endgeräteinheit (1) den Zustand des mindestens einen zu überwachenden Objekts für eine vorbestimmte Zeitdauer überwacht, die von der Zustandsbenachrichtigungsabfrage bestimmt wird.

41. Verfahren nach einem der Ansprüche 35 bis 40, wobei die zweite Endgeräteinheit (1) Informationen über die Gruppe von zu überwachenden Objekten von dem Verwaltungsserver erhält und die Informationen über die Gruppe von zu überwachenden Objekten interpretiert.

42. Verfahren nach Anspruch 41, wobei die zweite Endgeräteinheit (1) dem Verwaltungsserver eine Unterstützungsbenachrichtigung sendet, um die Informationen über die Gruppe von zu überwachenden Objekten von dem Verwaltungsserver zu erhalten.

43. Verfahren nach einem der Ansprüche 35 bis 42, wobei die Informationen zum Bestimmen der Gruppe von zu überwachenden Objekten Identifikationsinformationen über einen Teilsatz des mindestens einen zu überwachenden Objekts wiedergeben, wobei die Identifikationsinformationen von dem Verwaltungsserver verwaltet werden.

44. Verfahren nach einem der Ansprüche 35 bis 42, wobei die Informationen zum Bestimmen der Gruppe von zu überwachenden Objekten mindestens eine Liste des mindestens einen zu überwachenden Objekts wiedergeben.

45. Verfahren nach Anspruch 35, wobei das Informationsaustauschsystem als erste und zweite Endgeräteinheiten einen Melder (3) bzw. einen Teilnehmer (1) umfasst,
der Melder (3) ein Überwachungsmittel, das den Zustand mindestens einer Ressource überwacht, und ein Benachrichtigungsmittel, das mit einer ersten NOTIFY-Mitteilung eine Benachrichtigung über den Zustand der mindestens einen Ressource sendet, umfasst und
der Teilnehmer (1) ein Mittel zum Senden einer SUBSCRIBE-Abfrage umfasst, das eine SUBSCRIBE-Abfrage sendet, die Informationen zum Bestimmen einer Gruppe von Ressourcen umfasst, wobei die Gruppe die mindestens eine Ressource umfasst,
wobei das Verfahren umfasst:
einen Schritt in dem Verwaltungsserver zum Senden einer zweiten NOTIFY-Mitteilung, die keinen Inhalt aufweist, an den Teilnehmer (1), wenn die SUBSCRIBE-Abfrage aktualisiert wird.

46. Verfahren nach Anspruch 45, wobei der Verwaltungsserver die zweite NOTIFY-Mitteilung sendet, indem eine Mehrzahl zweiter NOTIFY-Mitteilungen, die keinen Inhalt aufweisen, in eine zweite NOTIFY-Mitteilung zusammengefügt werden, wenn die Zustandsbenachrichtigungsabfrage aktualisiert wird.

47. Verfahren nach Anspruch 45 oder 46, wobei der Verwaltungsserver den Zustand der mindestens einen Ressource empfängt, der von dem Melder (3) mit der ersten NOTIFY-Mitteilung gesendet wird, und den empfangenen Zustand in Ressourcenzustandshaltemitteln (244) hält, wobei der Verwaltungsserver weiterhin dem Teilnehmer (1) die zweite NOTIFY-Mitteilung für jede der mindestens einen Ressource sendet, wobei die zweite NOTIFY-Mitteilung den Zustand jeder der mindestens einen Ressource umfasst.

48. Verfahren nach Anspruch 45 oder 46, wobei der Verwaltungsserver den Zustand der mindestens einen Ressource empfängt, der von dem Melder (3) mit der ersten NOTIFY-Mitteilung gesendet wird, und den empfangenen Zustand in Ressourcenzustandshaltemitteln (244) hält, wobei der Verwaltungsserver weiterhin dem Teilnehmer (1) eine Mehrzahl NOTIFY-Mitteilungen sendet, die den Zustand der mindestens einen Ressource umfassen.

49. Verfahren nach einem der Ansprüche 45 bis 48, wobei der Verwaltungsserver Übertragungszeiten der NOTIFY-Mitteilungen staffelt.

50. Verfahren nach einem der Ansprüche 45 bis 49, wobei der Teilnehmer (1) den Zustand der mindestens einen Ressource überwacht, bis die SUBSCRIBE-Abfrage gelöscht wird.

51. Verfahren nach einem der Ansprüche 45 bis 49, wobei der Teilnehmer (1) den Zustand der mindestens einen Ressource für eine vorbestimmte Zeitdauer überwacht, die von der SUBSCRIBE-Abfrage bestimmt wird.

52. Verfahren nach einem der Ansprüche 45 bis 51, wobei der Teilnehmer (1) von dem Verwaltungsserver Informationen über die Gruppe von Ressourcen erhält und die Informationen über die Gruppe von Ressourcen interpretiert.

53. Verfahren nach Anspruch 52, wobei der Teilnehmer (1) dem Verwaltungsserver eine Unterstützungsbenachrichtigung sendet, um die Informationen über die Gruppe von Ressourcen von dem Verwaltungsserver zu erhalten.

54. Verfahren nach einem der Ansprüche 45 bis 53, wobei die Informationen zum Bestimmen der Gruppe von Ressourcen Identifkationsinformationen über einen Teilsatz der mindestens einen Ressource wiedergeben, wobei die Identifikationsinformationen von dem Verwaltungsserver verwaltet werden.

55. Verfahren nach einem der Ansprüche 45 bis 53, wobei die Informationen zum Bestimmen der Gruppe von Ressourcen mindestens eine Liste der mindestens einen Ressource wiedergeben.

## Revendications

1. Système d'échange d'informations comprenant une première unité terminale (3), une seconde unité terminale (1), et un serveur de gestion (2), qui est **caractérisé en ce que** :
la première unité terminale (3) comporte un moyen de surveillance qui surveille le statut d'au moins un objet devant être surveillé et un moyen de notification qui envoie au serveur de gestion une notification du statut dudit au moins un objet devant être surveillé,
la seconde unité terminale (1) comporte un moyen d'envoi de demande de notification de statut, et
le serveur de gestion comporte un moyen de traitement de transmission qui envoie un signal de notification à la seconde unité terminale (1), lorsque la demande de notification de statut est mise à jour,
**caractérisé en ce que**
le moyen d'envoi de demande de notification de statut est adapté pour envoyer au serveur de gestion une demande de notification de statut qui comporte des informations pour spécifier un groupe d'objets devant être surveillés, le groupe incluant ledit au moins un objet devant être surveillé,
le moyen de traitement de transmission est adapté pour envoyer un signal de notification qui n'comporte pas de contenu, et
le serveur de gestion envoie le signal de notification en mettant une pluralité de signaux de notification qui n'incluent pas de contenu ensemble dans un signal de notification, lorsque la demande de notification de statut est mise à jour.

2. Système d'échange d'informations selon la revendication 1, dans lequel le serveur de gestion comporte un moyen de conservation de statut d'objet surveillé (244) qui reçoit le statut dudit au moins un objet devant être surveillé en provenance de la première unité terminale (3) et conserve le statut reçu et un moyen de traitement de transmission qui envoie à la seconde unité terminale (1) un signal de notification pour chaque dit au moins un objet devant être surveillé, le signal de notification incluant le statut de chaque dit au moins un objet devant être surveillé.

3. Système d'échange d'informations selon la revendication 1, dans lequel le serveur de gestion comporte un moyen de conservation de statut d'objet surveillé (244) qui reçoit le statut dudit au moins un objet devant être surveillé en provenance de la première unité terminale (3) et conserve le statut reçu et un moyen de traitement de transmission qui envoie à la seconde unité terminale (1) une pluralité de signaux de notification qui incluent le statut dudit au moins un objet devant être surveillé, le signal de notification incluant le statut de chaque dit au moins un objet devant être surveillé.

4. Système d'échange d'informations selon l'une quelconque des revendications 1 à 3, dans lequel le serveur de gestion comporte en outre un moyen d'équilibrage (411) qui échelonne les positionnements temporels de transmission de la pluralité de signaux de notification.

5. Système d'échange d'informations selon l'une quelconque des revendications 1 à 4, dans lequel la seconde unité terminale (1) comporte un moyen qui surveille le statut dudit au moins un objet devant être surveillé jusqu'à ce que la demande de notification de statut soit annulée.

6. Système d'échange d'informations selon l'une quelconque des revendications 1 à 4, dans lequel la seconde unité terminale (1) comporte un moyen qui surveille le statut dudit au moins un objet devant être surveillé pendant une période de temps prédéterminée spécifiée par la demande de notification de statut.

7. Système d'échange d'informations selon l'une quelconque des revendications 1 à 6, dans lequel la seconde unité terminale (1) comporte en outre un moyen d'obtention d'informations qui obtient des informations sur le groupe d'objets devant être surveillés à partir du serveur de gestion et un moyen d'interprétation d'informations qui interprète les informations sur le groupe d'objets devant être surveillés.

8. Système d'échange d'informations selon la revendication 7, dans lequel la seconde unité terminale (1) comporte un moyen qui envoie au serveur de gestion une notification de support pour obtenir les informations sur le groupe d'objets devant être surveillés à partir du serveur de gestion.

9. Système d'échange d'informations selon l'une quelconque des revendications 1 à 8, dans lequel les informations pour spécifier le groupe d'objets devant être surveillés représentent des informations d'identification d'un sous-ensemble dudit au moins un objet devant être surveillé, les informations d'identification étant gérées par le serveur de gestion.

10. Système d'échange d'informations selon l'une quelconque des revendications 1 à 8, dans lequel les informations pour spécifier le groupe d'objets devant être surveillés représentent au moins une liste dudit au moins un objet devant être surveillé.

11. Système d'échange d'informations selon la revendication 1, dans lequel la première et la seconde unité terminale sont un notificateur (3) et un souscripteur (1), respectivement,
le notificateur (3) comporte un moyen de surveillance qui surveille le statut d'au moins une ressource et un moyen de notification qui envoie au serveur de gestion une notification du statut de ladite au moins une ressource avec un premier message NOTIFY (NOTIFIER),
le souscripteur (1) comporte un moyen d'envoi de demande SUBSCRIBE (SOUSCRIRE) qui envoie au serveur de gestion une demande SUBSCRIBE qui comporte des informations pour spécifier un groupe de ressources, le groupe incluant ladite au moins une ressource, et
le serveur de gestion comporte un moyen de traitement de transmission qui envoie un second message NOTIFY qui n'comporte pas de contenu au souscripteur (1), lorsque la demande SUBSCRIBE est mise à jour.

12. Système d'échange d'informations selon la revendication 11, dans lequel le serveur de gestion comporte un moyen qui envoie le second message NOTIFY en mettant une pluralité de seconds messages NOTIFY qui n'incluent pas de contenu ensemble dans un second message NOTIFY, lorsque la demande SUBSCRIBE est mise à jour.

13. Système d'échange d'informations selon la revendication 11 ou 12, dans lequel le serveur de gestion comporte un moyen de conservation de statut de ressource (244) qui reçoit le statut de ladite au moins une ressource envoyé depuis le notificateur (3) avec le premier message NOTIFY et conserve le statut reçu et un moyen de traitement de transmission qui envoie au souscripteur (1) le second message NOTIFY pour chaque dite au moins une ressource, le second message NOTIFY incluant le statut de chaque dite au moins une ressource.

14. Système d'échange d'informations selon la revendication 11 ou 12, dans lequel le serveur de gestion comporte un moyen de conservation de statut de ressource (244) qui reçoit le statut de ladite au moins une ressource envoyé depuis le notificateur (3) avec le premier message NOTIFY et conserve le statut reçu et un moyen de traitement de transmission qui envoie au souscripteur (1) une pluralité de messages NOTIFY, comme ledit second message NOTIFY, qui incluent le statut de ladite au moins une ressource.

15. Système d'échange d'informations selon l'une quelconque des revendications 11 à 14, dans lequel le serveur de gestion comporte en outre un moyen d'équilibrage qui échelonne les positionnements temporels de transmission de la pluralité de messages NOTIFY.

16. Système d'échange d'informations selon l'une quelconque des revendications 11 à 15, dans lequel le souscripteur (1) comporte un moyen qui surveille le statut de ladite au moins une ressource jusqu'à ce que la demande SUBSCRIBE soit annulée.

17. Système d'échange d'informations selon l'une quelconque des revendications 11 à 15, dans lequel le souscripteur (1) comporte un moyen qui surveille le statut de ladite au moins une ressource pendant une période de temps prédéterminée spécifiée par la demande SUBSCRIBE.

18. Système d'échange d'informations selon l'une quelconque des revendications 11 à 17, dans lequel le souscripteur (1) comporte en outre un moyen d'obtention d'informations qui obtient des informations sur le groupe de ressources à partir du serveur de gestion et un moyen d'interprétation d'informations qui interprète les informations sur le groupe de ressources.

19. Système d'échange d'informations selon la revendication 18, dans lequel le souscripteur (1) comporte un moyen qui envoie au serveur de gestion une notification de support pour obtenir les informations sur le groupe de ressources à partir du serveur de gestion.

20. Système d'échange d'informations selon l'une quelconque des revendications 11 à 19, dans lequel les informations pour spécifier le groupe de ressources représentent des informations d'identification d'un sous-ensemble de ladite au moins une ressource, les informations d'identification étant gérées par le serveur de gestion.

21. Système d'échange d'informations selon l'une quelconque des revendications 11 à 19, dans lequel les informations pour spécifier le groupe de ressources représentent au moins une liste de ladite au moins une ressource.

22. Serveur de gestion pour un système d'échange d'informations incluant une première unité terminale et une seconde unité terminale, qui est **caractérisé en ce que** :
la première unité terminale comporte un moyen de surveillance qui surveille le statut d'au moins un objet devant être surveillé et un moyen de notification qui envoie une notification du statut dudit au moins un objet devant être surveillé,
la seconde unité terminale comporte un moyen d'envoi de demande de notification de statut, et
le serveur de gestion comporte un moyen de traitement de transmission qui envoie un signal de notification, lorsque la demande de notification de statut est mise à jour,
**caractérisé en ce que**
le moyen d'envoi de demande de notification de statut est adapté pour envoyer une demande de notification de statut qui comporte des informations pour spécifier un groupe d'objets devant être surveillés, le groupe incluant ledit au moins un objet devant être surveillé,
le moyen de traitement de transmission est adapté pour envoyer un signal de notification qui n'comporte pas de contenu à la seconde unité terminale, et
le serveur de gestion envoie le signal de notification en mettant une pluralité de signaux de notification qui n'incluent pas de contenu ensemble dans un signal de notification, lorsque la demande de notification de statut est mise à jour.

23. Serveur de gestion selon la revendication 22, dans lequel le serveur de gestion comporte un moyen de conservation de statut d'objet surveillé qui reçoit le statut dudit au moins un objet devant être surveillé en provenance de la première unité terminale et conserve le statut reçu et un moyen de traitement de transmission qui envoie à la seconde unité terminale un signal de notification pour chaque dit au moins un objet devant être surveillé, le signal de notification incluant le statut de chaque dit au moins un objet devant être surveillé.

24. Serveur de gestion selon la revendication 22, dans lequel le serveur de gestion comporte un moyen de conservation de statut d'objet surveillé qui reçoit le statut dudit au moins un objet devant être surveillé en provenance de la première unité terminale et conserve le statut reçu et un moyen de traitement de transmission qui envoie à la seconde unité terminale une pluralité de signaux de notification qui incluent le statut dudit au moins un objet devant être surveillé, le signal de notification incluant le statut de chaque dit au moins un objet devant être surveillé.

25. Serveur de gestion selon l'une quelconque des revendications 22 à 24, comprenant en outre un moyen d'équilibrage qui échelonne les positionnements temporels de transmission de la pluralité de signaux de notification.

26. Serveur de gestion selon l'une quelconque des revendications 22 à 25, dans lequel les informations pour spécifier le groupe d'objets devant être surveillés représentent des informations d'identification d'un sous-ensemble dudit au moins un objet devant être surveillé, les informations d'identification étant gérées par le serveur de gestion.

27. Serveur de gestion selon l'une quelconque des revendications 22 à 25, dans lequel les informations pour spécifier le groupe d'objets devant être surveillés représentent au moins une liste dudit au moins un objet devant être surveillé.

28. Serveur de gestion selon la revendication 22, dans lequel le système d'échange d'informations comporte un notificateur (3) et un souscripteur (1) comme la première et la seconde unité terminale, respectivement,
le notificateur (3) comporte un moyen de surveillance qui surveille le statut d'au moins une ressource et un moyen de notification qui envoie une notification du statut de ladite au moins une ressource avec un premier message NOTIFY (NOTIFIER),
le souscripteur (1) comporte un moyen d'envoi de demande SUBSCRIBE (SOUSCRIRE) qui envoie une demande SUBSCRIBE qui comporte des informations pour spécifier un groupe de ressources, le groupe incluant ladite au moins une ressource, et
le serveur de gestion comporte un moyen de traitement de transmission qui envoie un second message NOTIFY qui n'comporte pas de contenu au souscripteur (1), lorsque la demande SUBSCRIBE est mise à jour.

29. Serveur de gestion selon la revendication 28, dans lequel le serveur de gestion comporte un moyen qui envoie le second message NOTIFY en mettant une pluralité de seconds messages NOTIFY qui n'incluent pas de contenu ensemble dans un second message NOTIFY, lorsque la demande SUBSCRIBE est mise à jour.

30. Serveur de gestion selon la revendication 28 ou 29, le serveur de gestion comporte un moyen de conservation de statut de ressource qui reçoit le statut de ladite au moins une ressource envoyé depuis le notificateur (3) avec le premier message NOTIFY et conserve le statut reçu et un moyen de traitement de transmission qui envoie au souscripteur (1) le second message NOTIFY pour chaque dite au moins une ressource, le second message NOTIFY incluant le statut de chaque dite au moins une ressource.

31. Serveur de gestion selon la revendication 28 ou 29, dans lequel le serveur de gestion comporte un moyen de conservation de statut de ressource qui reçoit le statut de ladite au moins une ressource envoyé depuis le notificateur (3) avec le premier message NOTIFY et conserve le statut reçu et un moyen de traitement de transmission qui envoie au souscripteur (1) une pluralité de messages NOTIFY, comme ledit second message NOTIFY, qui incluent le statut de ladite au moins une ressource.

32. Serveur de gestion selon l'une quelconque des revendications 28 ou 31, comprenant en outre un moyen d'équilibrage qui échelonne les positionnements temporels de transmission de la pluralité de messages NOTIFY.

33. Serveur de gestion selon l'une quelconque des revendications 28 ou 32, dans lequel les informations pour spécifier le groupe de ressources représentent des informations d'identification d'un sous-ensemble de ladite au moins une ressource, les informations d'identification étant gérées par le serveur de gestion.

34. Serveur de gestion selon l'une quelconque des revendications 28 à 32, dans lequel les informations pour spécifier le groupe de ressources représentent au moins une liste de ladite au moins une ressource.

35. Procédé pour réduire une charge de réseau, le procédé étant appliqué à un système d'échange d'informations qui comporte une première unité terminale (3), une seconde unité terminale (1), et un serveur de gestion (2), qui est **caractérisé en ce que** :
la première unité terminale (3) comporte un moyen de surveillance qui surveille le statut d'au moins un objet devant être surveillé et un moyen de notification qui envoie une notification du statut dudit au moins un objet devant être surveillé,
la seconde unité terminale (1) comporte un moyen d'envoi de demande de notification de statut qui envoie une demande de notification de statut qui comporte des informations pour spécifier un groupe d'objets devant être surveillés, le groupe incluant ledit au moins un objet devant être surveillé,
**caractérisé en ce que** le procédé comprend :
une étape dans le serveur de gestion consistant à envoyer un signal de notification qui n'comporte pas de contenu à la seconde unité terminale (1), lorsque la demande de notification de statut est mise à jour,
dans lequel le serveur de gestion envoie le signal de notification en mettant une pluralité de signaux de notification qui n'incluent pas de contenu ensemble dans un signal de notification, lorsque la demande de notification de statut est mise à jour.

36. Procédé selon la revendication 35, dans lequel le serveur de gestion reçoit le statut dudit au moins un objet devant être surveillé en provenance de la première unité terminale (3) et conserve le statut reçu dans un moyen de conservation de statut d'objet surveillé (244), le serveur de gestion envoyant en outre à la seconde unité terminale (1) un signal de notification pour chaque dit au moins un objet devant être surveillé, le signal de notification incluant le statut de chaque dit au moins un objet devant être surveillé.

37. Procédé selon la revendication 35, dans lequel le serveur de gestion reçoit le statut dudit au moins un objet devant être surveillé en provenance de la première unité terminale (3) et conserve le statut reçu dans un moyen de conservation de statut d'objet surveillé (244), le serveur de gestion envoyant en outre à la seconde unité terminale (1) une pluralité de signaux de notification qui incluent le statut dudit au moins un objet devant être surveillé.

38. Procédé selon l'une quelconque des revendications 35 à 37, dans lequel le serveur de gestion échelonne les positionnements temporels de transmission des signaux de notification.

39. Procédé selon l'une quelconque des revendications 35 à 38, dans lequel la seconde unité terminale (1) surveille le statut dudit au moins un objet devant être surveillé jusqu'à ce que la demande de notification de statut soit annulée.

40. Procédé selon l'une quelconque des revendications 35 à 38, dans lequel la seconde unité terminale (1) surveille le statut dudit au moins un objet devant être surveillé pendant une période de temps prédéterminée spécifiée par la demande de notification de statut.

41. Procédé selon l'une quelconque des revendications 35 à 40, dans lequel la seconde unité terminale (1) obtient des informations sur le groupe d'objets devant être surveillés à partir du serveur de gestion et interprète les informations sur le groupe d'objets devant être surveillés.

42. Procédé selon la revendication 41, dans lequel la seconde unité terminale (1) envoie au serveur de gestion une notification de support pour obtenir les informations sur le groupe d'objets devant être surveillés à partir du serveur de gestion.

43. Procédé selon l'une quelconque des revendications 35 à 42, dans lequel les informations pour spécifier le groupe d'objets devant être surveillés représentent des informations d'identification d'un sous-ensemble dudit au moins un objet devant être surveillé, les informations d'identification étant gérées par le serveur de gestion.

44. Procédé selon l'une quelconque des revendications 35 à 42, dans lequel les informations pour spécifier le groupe d'objets devant être surveillés représentent au moins une liste dudit au moins un objet devant être surveillé.

45. Procédé selon la revendication 35, dans lequel le système d'échange d'informations comporte un notificateur (3) et un souscripteur (1) comme la première et la seconde unité terminale,
le notificateur (3) comporte un moyen de surveillance qui surveille le statut d'au moins une ressource et un moyen de notification qui envoie une notification du statut de ladite au moins une ressource avec un premier message NOTIFY (NOTIFIER), et
le souscripteur (1) comporte un moyen d'envoi de demande SUBSCRIBE (SOUSCRIRE) qui envoie une demande SUBSCRIBE qui comporte des informations pour spécifier un groupe de ressources, le groupe incluant ladite au moins une ressource,
le procédé comprenant :
une étape dans le serveur de gestion consistant à envoyer un second message NOTIFY qui n'comporte pas de contenu au souscripteur (1), lorsque la demande SUBSCRIBE est mise à jour.

46. Procédé selon la revendication 45, dans lequel le serveur de gestion envoie le second message NOTIFY en mettant une pluralité de seconds messages NOTIFY qui n'incluent pas de contenu ensemble dans un second message NOTIFY, lorsque la demande de notification de statut est mise à jour.

47. Procédé selon la revendication 45 ou 46, dans lequel le serveur de gestion reçoit le statut de ladite au moins une ressource envoyé depuis le notificateur (3) avec le premier message NOTIFY et conserve le statut reçu dans un moyen de conservation de statut de ressource (244), le serveur de gestion envoyant en outre au souscripteur (1) le second message NOTIFY pour chaque dite au moins une ressource, le second message NOTIFY incluant le statut de chaque dite au moins une ressource.

48. Procédé selon la revendication 45 ou 46, dans lequel le serveur de gestion reçoit le statut de ladite au moins une ressource envoyé depuis le notificateur (3) avec le premier message NOTIFY et conserve le statut reçu dans un moyen de conservation de statut de ressource (244), le serveur de gestion envoyant en outre au souscripteur (1) une pluralité de messages NOTIFY qui incluent le statut de ladite au moins une ressource.

49. Procédé selon l'une quelconque des revendications 45 à 48, dans lequel le serveur de gestion échelonne les positionnements temporels de transmission des messages NOTIFY.

50. Procédé selon l'une quelconque des revendications 45 à 49, dans lequel le souscripteur (1) surveille le statut de ladite au moins une ressource jusqu'à ce que la demande SUBSCRIBE soit annulée.

51. Procédé selon l'une quelconque des revendications 45 à 49, dans lequel le souscripteur (1) surveille le statut de ladite au moins une ressource pendant une période de temps prédéterminée spécifiée par la demande SUBSCRIBE.

52. Procédé selon l'une quelconque des revendications 45 à 51, dans lequel le souscripteur (1) obtient des informations sur le groupe de ressources à partir du serveur de gestion et interprète les informations sur le groupe de ressources.

53. Procédé selon la revendication 52, dans lequel le souscripteur (1) envoie au serveur de gestion une notification de support pour obtenir les informations sur le groupe de ressources à partir du serveur de gestion.

54. Procédé selon l'une quelconque des revendications 45 à 53, dans lequel les informations pour spécifier le groupe de ressources représentent des informations d'identification d'un sous-ensemble de ladite au moins une ressource, les informations d'identification étant gérées par le serveur de gestion.

55. Procédé selon l'une quelconque des revendications 45 à 53, dans lequel les informations pour spécifier le groupe de ressources représentent au moins une liste de ladite au moins une ressource.
